# EUROPEAN PATENT SPECIFICATION

(11) **EP 4 575 976 B1**
(45) Date of publication and mention of the grant of the patent: **25.11.2026**
(21) Application number: 24220684.5
(22) Date of filing: 17.12.2024
(51) Int. Cl.: G06T 3/4053, G06N 3/044, G06N 3/045, G06N 3/048, G06N 3/063, G06N 3/08, G06N 3/0464, H04N 19/59

(54) **WEIGHTING PARAMETERS FOR USE IN APPLYING UPSAMPLING**
GEWICHTUNGSPARAMETER ZUR VERWENDUNG BEI DER ANWENDUNG VON UPSAMPLING
PARAMÈTRES DE PONDÉRATION DESTINÉS À ÊTRE UTILISÉS DANS L'APPLICATION D'UN SURÉCHANTILLONNAGE

(30) Priority: 20.12.2023 GB 202319649
(43) Date of publication of application: 25.06.2025
(73) Proprietor: Imagination Technologies Limited, Kings Langley, Hertfordshire WD4 8LZ (GB)
(72) Inventor: Gale, Timothy, Kings Langley, WD4 8LZ (GB); Imber, James, Kings Langley, WD4 8LZ (GB); Liu, Jingyang, Kings Langley, WD4 8LZ (GB)
(74) Representative: Slingsby Partners LLP

(56) References cited:
- WO-A1-2023/197194
- GB-A- 2 617 220
- KONG LUOYI ET AL: "FISRCN: a single small-sized image super-resolution convolutional neural network by using edge detection", vol. 83, no. 7, 28 July 2023 (2023-07-28), Bo, pages 19609 - 19627, XP093272595, ISSN: 1573-7721, Retrieved from the Internet <URL:https://link.springer.com/article/10.1007/s11042-023-15380-3/fulltext.html> DOI: 10.1007/s11042-023-15380-3

## Description

### CROSS-REFERENCE TO RELATED APPLICATION

This application claims priority from UK patent application 2319649.6 filed on 20 December 2023.

### TECHNICAL FIELD

The present disclosure is directed to upsampling. In particular, upsampling can be applied to input pixel values representing an image region to determine a block of upsampled pixel values, e.g. for super resolution techniques.

### BACKGROUND

The term 'super resolution' refers to techniques of upsampling an image that enhance the apparent visual quality of the image, e.g. by estimating the appearance of a higher resolution version of the image. When implementing super resolution, a system will attempt to find a higher resolution version of a lower resolution input image that is maximally plausible and consistent with the lower-resolution input image. Super resolution is a challenging problem because, for every patch in a lower-resolution input image, there is a very large number of potential higher-resolution patches that could correspond to it. In other words, super resolution techniques are trying to solve an ill-posed problem, since although solutions exist, they are not unique.

Super resolution has important applications. It can be used to increase the resolution of an image, thereby increasing the 'quality' of the image as perceived by a viewer. Furthermore, it can be used as a post-processing step in an image generation process, thereby allowing images to be generated at lower resolution (which is often simpler and faster) whilst still resulting in a high quality, high resolution image. An image generation process may be an image capturing process, e.g. using a camera. Alternatively, an image generation process may be an image rendering process in which a computer, e.g. a graphics processing unit (GPU), renders an image of a virtual scene. Compared to using a GPU to render a high resolution image directly, allowing a GPU to render a low resolution image and then applying a super resolution technique to upsample the rendered image to produce a high resolution image has potential to significantly reduce the latency, bandwidth, power consumption, silicon area and/or compute costs of the GPU. GPUs may implement any suitable rendering technique, such as rasterization or ray tracing. For example, a GPU can render a 960x540 image (i.e. an image with 518,400 pixels arranged into 960 columns and 540 rows) which can then be upsampled by a factor of 2 in both horizontal and vertical dimensions (which is referred to as '2x upsampling') to produce a 1920x1080 image (i.e. an image with 2,073,600 pixels arranged into 1920 columns and 1080 rows). In this way, in order to produce the 1920x1080 image, the GPU renders an image with a quarter of the number of pixels. This results in very significant savings (e.g. in terms of latency, power consumption and/or silicon area of the GPU) during rendering and can for example allow a relatively low-performance GPU to render high-quality, high-resolution images within a low power and area budget, provided a suitably efficient and high-quality super-resolution implementation is used to perform the upsampling. In other examples, different upsampling factors (other than 2x) may be applied.

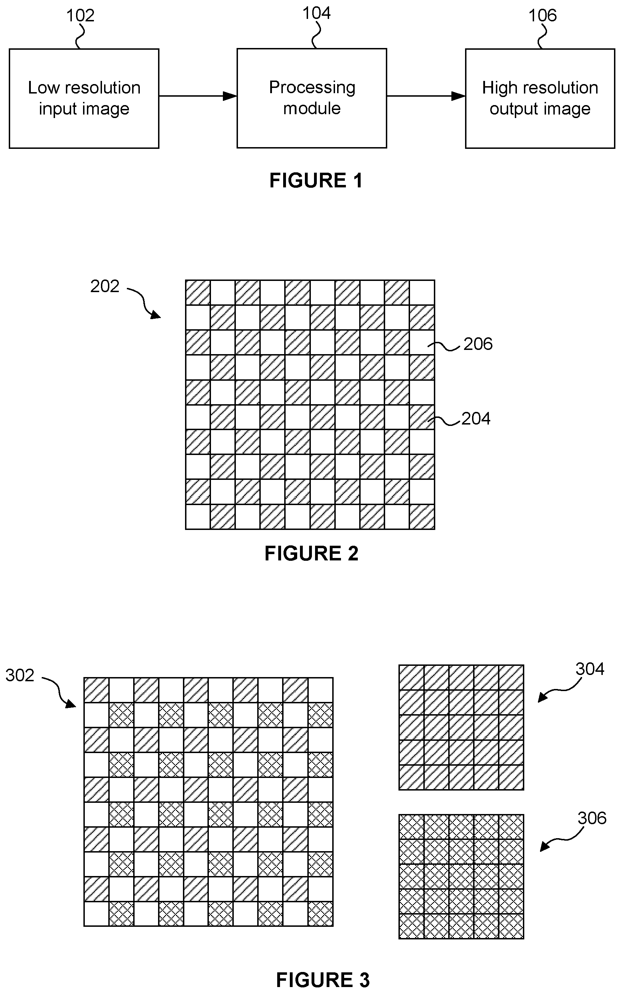

Figure 1 illustrates an upsampling process. An input image 102, which has a relatively low resolution, is processed by a processing module 104 to produce an output image 106 which has a relatively high resolution. In some systems, the processing module 104 may be implemented as a neural network to upsample the input image 102 to produce the upsampled output image 106. Implementing the processing module 104 as a neural network may produce good quality output images, but often requires a high performance computing system (e.g. with large, powerful processing units and memories) to implement the neural network. As such, implementing the processing module 104 as a neural network for performing upsampling of images may be unsuitable for reasons of processing time, latency, bandwidth, power consumption, memory usage, silicon area and compute costs. These considerations of efficiency are particularly important in some devices, e.g. small, battery operated devices with limited compute and bandwidth resources, such as mobile phones and tablets.

Some systems do not use a neural network for performing super resolution on images, and instead use more conventional processing modules. For example, some systems split the problem into two stages: (i) upsampling and (ii) adaptive sharpening. In these systems, the upsampling stage can be performed cheaply, e.g. using bilinear upsampling, and the adaptive sharpening stage can be used to sharpen the image, i.e. reduce the blurring introduced by the upsampling. Bilinear upsampling is known in the art and uses linear interpolation of adjacent input pixels in two dimensions to produce output pixels at positions between input pixels.

General aims for systems implementing super resolution are: (i) high quality output images, i.e. for the output images to be maximally plausible given the low resolution input images, (ii) low latency so that output images are generated quickly, (iii) a low cost processing module in terms of resources such as power, bandwidth and silicon area.
GB 2617220 A relates to a method of upsampling a block of input pixels to determine a block of upsampled pixels.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a computer implemented method, according to claim 1, of determining an indication of one or more weighting parameters for use in applying upsampling to input pixel values representing an image region to determine a block of one or more upsampled pixel values. There is also provided a processing module, according to claim 12, configured to determine an indication of one or more weighting parameters for use in applying upsampling to input pixel values representing an image region to determine a block of one or more upsampled pixel values. There may be provided a method of determining an indication of one or more weighting parameters for use in applying upsampling to input pixel values representing an image region to determine a block of one or more upsampled pixel values, the method comprising:
applying a horizontal edge filter to two or more of the input pixel values to determine a first filtered value;
applying a vertical edge filter to two or more of the input pixel values to determine a second filtered value;
applying a horizontal line filter to three or more of the input pixel values to determine a third filtered value;
applying a vertical line filter to three or more of the input pixel values to determine a fourth filtered value;
using the first, second, third and fourth filtered values to determine the indication of one or more weighting parameters, wherein the one or more weighting parameters are indicative of relative horizontal and vertical variation of the input pixel values within the image region; and
outputting the determined indication of the one or more weighting parameters for use in applying upsampling to the input pixel values representing the image region to determine a block of one or more upsampled pixel values.

Said using the first, second, third and fourth filtered values to determine the indication of one or more weighting parameters may comprise combining the first, second, third and fourth filtered values by performing a weighted sum.

One or more of the weights used in the weighted sum may be trained so that the indication of one or more weighting parameters indicates one or more weighting parameters that are indicative of relative horizontal and vertical variation of the input pixels within the image region.

The indication of the one or more weighting parameters may be clamped to be in a range [0,1] before it is output.

Said using the first, second, third and fourth filtered values to determine the indication of one or more weighting parameters may comprise:
processing the input pixel values with an implementation of a neural network to determine a residual value; and
combining the determined residual value with the first, second, third and fourth filtered values to determine the indication of one or more weighting parameters.

The neural network may comprise a first convolution layer, a second convolution layer and a third convolution layer, and wherein said processing the input pixel values with the implementation of the neural network may comprise:
using the first convolution layer to determine a first intermediate tensor based on the input pixel values, wherein the first intermediate tensor extends in only one of a horizontal dimension and a vertical dimension with respect to the dimensions of the image region represented by the input pixel values;
using the second convolution layer to determine a second intermediate tensor based on the first intermediate tensor, wherein the second intermediate tensor does not extend in either the horizontal dimension or the vertical dimension with respect to the dimensions of the image region represented by the input pixel values; and
using the third convolution layer to determine the residual value based on the second intermediate tensor.

The image region may be part of an input image, and the upsampling may be to be performed iteratively for a plurality of partially overlapping image regions within the input image. Said processing the input pixel values with the implementation of the neural network may further comprise storing the first intermediate tensor in a buffer. The first convolution layer may operate on input pixel values within a first portion of a current image region that does not overlap with a previous image region, but might not operate on input pixel values within a second portion of the current image region that does overlap with the previous image region, to determine the first intermediate tensor.

The neural network may further comprise a first activation function implemented between the first convolution layer and the second convolution layer, and a second activation function implemented between the second convolution layer and the third convolution layer.

The first activation function may be a first rectified linear unit and the second activation function may be a second rectified linear unit, and said processing the input pixel values with the implementation of the neural network may further comprise: (i) using the first rectified linear unit to set negative values in the first intermediate tensor to zero, and (ii) using the second rectified linear unit to set negative values in the second intermediate tensor to zero.

The first activation function may be an identity function and the second activation function may be an absolute function, and said processing the input pixel values with the implementation of the neural network may further comprise using the absolute function to set the values in the second intermediate tensor to be absolute values.

The neural network may have been trained using Quantization Aware Training (QAT).

The horizontal line filter may be configured so as to determine the third filtered value to be zero when the three or more of the input pixel values that the horizontal line filter is applied to exhibit purely vertical features. The vertical line filter may be configured so as to determine the fourth filtered value to be zero when the three or more of the input pixel values that the vertical line filter is applied to exhibit purely horizontal features.

The input pixel values may be values of input pixels having locations corresponding to a repeating quincunx arrangement of upsampled pixel locations.

The input pixel values may be represented in two input blocks, wherein one of the two input blocks may comprise the input pixel values of input pixels having locations corresponding to locations within odd rows of the repeating quincunx arrangement of upsampled pixel locations, and the other of the two input blocks may comprise the input pixel values of input pixels having locations corresponding to locations within even rows of the repeating quincunx arrangement of upsampled pixel locations.

Each of the filters may have a filter kernel with weights at input pixel locations corresponding to a 5x5 region of upsampled pixel locations centred on an upsampled pixel location which falls between the locations of adjacent input pixels in the quincunx arrangement.

The horizontal edge filter may have a filter kernel with weights that can be represented as

| | | | | |
|---|---|---|---|---|
| | 0.5 | | 0.5 | |
| 0 | | 1 | | 0 |
| | 0 | | 0 | |
| 0 | | -1 | | 0 |
| | -0.5 | | -0.5 | |

The vertical edge filter may have a filter kernel with weights that can be represented as

| | | | | |
|---|---|---|---|---|
| | 0 | | 0 | |
| -0.5 | | 0 | | 0.5 |
| | -1 | | 1 | |
| -0.5 | | 0 | | 0.5 |
| | 0 | | 0 | |

The horizontal line filter may have a filter kernel with weights that can be represented as

| | | | | |
|---|---|---|---|---|
| | -0.5 | | -0.5 | |
| 0 | | 0 | | 0 |
| | 1 | | 1 | |
| 0 | | 0 | | 0 |
| | -0.5 | | -0.5 | |

The vertical line filter may have a filter kernel with weights that can be represented as

| | | | | |
|---|---|---|---|---|
| | 0 | | 0 | |
| -0.5 | | 1 | | -0.5 |
| | 0 | | 0 | |
| -0.5 | | 1 | | -0.5 |
| | 0 | | 0 | |

Each of the filters may have one or more filter kernels with weights at input pixel locations corresponding to a 6x6 region of upsampled pixel locations centred on a 2x2 block of upsampled pixel locations, wherein each of the filters may be configured to determine filtered values for a top right upsampled pixel location, TR, and for a bottom left upsampled pixel location, BL, of the 2x2 block of upsampled pixel locations. The vertical line filter may have six filter kernels, denoted kernel 0 to kernel 5, centred on the 2x2 block of upsampled pixel locations, with weights that can be represented as:

| | | | | | |
|---|---|---|---|---|---|
| -0.5 | | 1 | | -0.5 | |
| | 0 | | 0 | | 0 |
| 0 | | 0 | TR | 0 | |
| | 0 | BL | 0 | | 0 |
| 0 | | 0 | | 0 | |
| | 0 | | 0 | | 0 |

### Kernel 0

| | | | | | |
|---|---|---|---|---|---|
| 0 | | 0 | | 0 | |
| | -0.5 | | 1 | | -0.5 |
| 0 | | 0 | TR | 0 | |
| | 0 | BL | 0 | | 0 |
| 0 | | 0 | | 0 | |
| | 0 | | 0 | | 0 |

### Kernel 1

| | | | | | |
|---|---|---|---|---|---|
| 0 | | 0 | | 0 | |
| | 0 | | 0 | | 0 |
| -0.5 | | 1 | TR | -0.5 | |
| | 0 | BL | 0 | | 0 |
| 0 | | 0 | | 0 | |
| | 0 | | 0 | | 0 |

### Kernel 2

| | | | | | |
|---|---|---|---|---|---|
| 0 | | 0 | | 0 | |
| | 0 | | 0 | | 0 |
| 0 | | 0 | TR | 0 | |
| | -0.5 | BL | 1 | | -0.5 |
| 0 | | 0 | | 0 | |
| | 0 | | 0 | | 0 |

### Kernel 3

| | | | | | |
|---|---|---|---|---|---|
| 0 | | 0 | | 0 | |
| | 0 | | 0 | | 0 |
| 0 | | 0 | TR | 0 | |
| | 0 | BL | 0 | | 0 |
| -0.5 | | 1 | | -0.5 | |
| | 0 | | 0 | | 0 |

### Kernel 4

| | | | | | |
|---|---|---|---|---|---|
| 0 | | 0 | | 0 | |
| | 0 | | 0 | | 0 |
| 0 | | 0 | TR | 0 | |
| | 0 | BL | 0 | | 0 |
| 0 | | 0 | | 0 | |
| | -0.5 | | 1 | | -0.5 |

### Kernel 5

The filtered value for the vertical line filter for each of the top right upsampled pixel location and the bottom left upsampled pixel location of the 2x2 block of upsampled pixel locations may be determined by finding a weighted sum of the absolute values of the outputs of a plurality of the six filter kernels, denoted kernel 0 to kernel 5. The horizontal line filter may have six filter kernels, denoted kernel 6 to kernel 11, centred on the 2x2 block of upsampled pixel locations, with weights that can be represented as:

| | | | | | |
|---|---|---|---|---|---|
| -0.5 | | 0 | | 0 | |
| | 0 | | 0 | | 0 |
| 1 | | 0 | TR | 0 | |
| | 0 | BL | 0 | | 0 |
| -0.5 | | 0 | | 0 | |
| | 0 | | 0 | | 0 |

### Kernel 6

| | | | | | |
|---|---|---|---|---|---|
| 0 | | 0 | | 0 | |
| | -0.5 | | 0 | | 0 |
| 0 | | 0 | TR | 0 | |
| | 1 | BL | 0 | | 0 |
| 0 | | 0 | | 0 | |
| | -0.5 | | 0 | | 0 |

### Kernel 7

| | | | | | |
|---|---|---|---|---|---|
| 0 | | -0.5 | | 0 | |
| | 0 | | 0 | | 0 |
| 0 | | 1 | TR | 0 | |
| | 0 | BL | 0 | | 0 |
| 0 | | -0.5 | | 0 | |
| | 0 | | 0 | | 0 |

### Kernel 8

| | | | | | |
|---|---|---|---|---|---|
| 0 | | 0 | | 0 | |
| | 0 | | -0.5 | | 0 |
| 0 | | 0 | TR | 0 | |
| | 0 | BL | 1 | | 0 |
| 0 | | 0 | | 0 | |
| | 0 | | -0.5 | | 0 |

### Kernel 9

| | | | | | |
|---|---|---|---|---|---|
| 0 | | 0 | | -0.5 | |
| | 0 | | 0 | | 0 |
| 0 | | 0 | TR | 1 | |
| | 0 | BL | 0 | | 0 |
| 0 | | 0 | | -0.5 | |
| | 0 | | 0 | | 0 |

### Kernel 10

| | | | | | |
|---|---|---|---|---|---|
| 0 | | 0 | | 0 | |
| | 0 | | 0 | | -0.5 |
| 0 | | 0 | TR | 0 | |
| | 0 | BL | 0 | | 1 |
| 0 | | 0 | | 0 | |
| | 0 | | 0 | | -0.5 |

### Kernel 11

The filtered value for the horizontal line filter for each of the top right upsampled pixel location and the bottom left upsampled pixel location of the 2x2 block of upsampled pixel locations may be determined by finding a weighted sum of the absolute values of the outputs of a plurality of the six filter kernels, denoted kernel 6 to kernel 11. The vertical edge filter may have two filter kernels, denoted kernel 12 and kernel 13, centred on the 2x2 block of upsampled pixel locations, with weights that can be represented as:

| | | | | | |
|---|---|---|---|---|---|
| 0 | | 0 | | 0 | |
| | 0 | | 0 | | 0 |
| 0 | | 1 | TR | -1 | |
| | 0 | BL | 0 | | 0 |
| 0 | | 0 | | 0 | |
| | 0 | | 0 | | 0 |

### Kernel 12

| | | | | | |
|---|---|---|---|---|---|
| 0 | | 0 | | 0 | |
| | 0 | | 0 | | 0 |
| 0 | | 0 | TR | 0 | |
| | 1 | BL | -1 | | 0 |
| 0 | | 0 | | 0 | |
| | 0 | | 0 | | 0 |

### Kernel 13

The filtered value for the vertical edge filter for both the top right upsampled pixel location and the bottom left upsampled pixel location of the 2x2 block of upsampled pixel locations may be determined to be the sum of the absolute value of the output of kernel 12 and the absolute value of the output of kernel 13. The horizontal edge filter may have two filter kernels, denoted kernel 14 and kernel 15, centred on the 2x2 block of upsampled pixel locations, with weights that can be represented as:

| | | | | | |
|---|---|---|---|---|---|
| 0 | | 0 | | 0 | |
| | 0 | | 1 | | 0 |
| 0 | | 0 | TR | 0 | |
| | 0 | BL | -1 | | 0 |
| 0 | | 0 | | 0 | |
| | 0 | | 0 | | 0 |

### Kernel 14

| | | | | | |
|---|---|---|---|---|---|
| 0 | | 0 | | 0 | |
| | 0 | | 0 | | 0 |
| 0 | | 1 | TR | 0 | |
| | 0 | BL | 0 | | 0 |
| 0 | | -1 | | 0 | |
| | 0 | | 0 | | 0 |

### Kernel 15

The filtered value for the horizontal edge filter for both the top right upsampled pixel location and the bottom left upsampled pixel location of the 2x2 block of upsampled pixel locations may be determined to be the sum of the absolute value of the output of kernel 14 and the absolute value of the output of kernel 15.

Input pixels may be represented by values in multiple channels. Upsampled pixels may be represented by values in multiple channels. Said input pixel values may be values of the input pixels in a single channel, and said upsampled pixel values may be values of the upsampled pixels in said single channel.

The input pixel values and the upsampled pixel values may be Y channel values, and the upsampling of the Y channel values may be for use in a super resolution technique.

The input pixel values and the upsampled pixel values may be Green channel values, and the upsampling of the Green channel values may be for use in a demosaicing technique.

The method may further comprise applying upsampling to the input pixel values representing the image region. Said upsampling may comprise determining one or more of the upsampled pixel values of the block of one or more upsampled pixel values in accordance with the relative horizontal and vertical variation of the input pixel values within the image region indicated by the one or more weighting parameters.

Determining each of said one or more of the upsampled pixel values may comprise, in accordance with the determined one or more weighting parameters:
applying one or more first kernels to at least a first subset of the input pixel values to determine a horizontal component,
applying one or more second kernels to at least a second subset of the input pixel values to determine a vertical component, and
combining the determined horizontal and vertical components,
such that each of said one or more of the upsampled pixel values is determined in accordance with the relative horizontal and vertical variation of the input pixel values within the image region.

Said combining the determined horizontal and vertical components may comprise:
multiplying the horizontal component by a first of the weighting parameters to determine a weighted horizontal component;
multiplying the vertical component by a second of the weighting parameters to determine a weighted vertical component; and
summing the weighted horizontal component and the weighted vertical component.

The one or more upsampled pixel values in the block of one or more upsampled pixel values may be non-sharpened upsampled pixel values.

The one or more upsampled pixel values in the block of one or more upsampled pixel values may be sharpened upsampled pixel values.

There may be provided a processing module configured to determine an indication of one or more weighting parameters for use in applying upsampling to input pixel values representing an image region to determine a block of one or more upsampled pixel values, the processing module comprising:
horizontal edge filtering logic configured to apply a horizontal edge filter to two or more of the input pixel values to determine a first filtered value;
vertical edge filtering logic configured to apply a vertical edge filter to two or more of the input pixel values to determine a second filtered value;
horizontal line filtering logic configured to apply a horizontal line filter to three or more of the input pixel values to determine a third filtered value;
vertical line filtering logic configured to apply a vertical line filter to three or more of the input pixel values to determine a fourth filtered value; and
processing logic configured to:
   use the first, second, third and fourth filtered values to determine the indication of one or more weighting parameters, wherein the one or more weighting parameters are indicative of relative horizontal and vertical variation of the input pixel values within the image region; and
   output the determined indication of the one or more weighting parameters for use in applying upsampling to the input pixel values representing the image region to determine a block of one or more upsampled pixel values.

The processing logic may be configured to perform a weighted sum of the first, second, third and fourth filtered values.

The processing module may further comprise an implementation of a neural network configured to determine a residual value, wherein the processing logic may be configured to combine the residual value with the first, second, third and fourth filtered values to determine the indication of one or more weighting parameters.

The neural network may comprise:
a first convolution layer configured to determine a first intermediate tensor based on the input pixel values, wherein the first intermediate tensor extends in only one of a horizontal dimension and a vertical dimension with respect to the dimensions of the image region represented by the input pixel values;
a second convolution layer configured to determine a second intermediate tensor based on the first intermediate tensor, wherein the second intermediate tensor does not extend in either the horizontal dimension or the vertical dimension with respect to the dimensions of the image region represented by the input pixel values; and
a third convolution layer configured to determine the residual value based on the second intermediate tensor.

The processing module may further comprise pixel determination logic configured to determine one or more of the upsampled pixel values of the block of one or more upsampled pixel values in accordance with the relative horizontal and vertical variation of the input pixel values within the image region indicated by the one or more weighting parameters.

There may be provided a processing module configured to perform any of the methods described herein.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing module as described herein.

The processing module may be embodied in hardware on an integrated circuit. There may be provided a method of manufacturing, at an integrated circuit manufacturing system, a processing module. There may be provided an integrated circuit definition dataset that, when processed in an integrated circuit manufacturing system, configures the system to manufacture a processing module. There may be provided a non-transitory computer readable storage medium having stored thereon a computer readable description of a processing module that, when processed in an integrated circuit manufacturing system, causes the integrated circuit manufacturing system to manufacture an integrated circuit embodying a processing module.

There may be provided an integrated circuit manufacturing system comprising: a non-transitory computer readable storage medium having stored thereon a computer readable description of the processing module; a layout processing system configured to process the computer readable description so as to generate a circuit layout description of an integrated circuit embodying the processing module; and an integrated circuit generation system configured to manufacture the processing module according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 illustrates an upsampling process;
Figure 2 shows input pixels having locations corresponding to a repeating quincunx arrangement of upsampled pixel locations;
Figure 3 shows the input pixels being represented in two input blocks;
Figure 4 shows a processing module configured to upsample input pixel values to determine a block of upsampled pixel values;
Figure 5 is a flow chart for a method of applying upsampling to input pixel values representing an image region to determine a block of upsampled pixel values;
Figure 6 is a flow chart of method steps for determining an upsampled pixel value;
Figure 7 shows a portion of the input pixel values and illustrates how a block of upsampled pixel values relates to the input pixel values;
Figure 8a shows a first kernel for applying a first weighting parameter;
Figure 8b shows a second kernel for applying a second weighting parameter;
Figure 9 illustrates weighting parameter determination logic configured to determine an indication of one or more weighting parameters;
Figure 10 is a flow chart for a method of determining an indication of the weighting parameter(s) using the weighting parameter determination logic;
Figure 11 illustrates an example of step S1012 from the method shown in Figure 10 in more detail;
Figure 12 illustrates an implementation of a neural network configured to output a residual value for use in determining an indication of one or more weighting parameters;
Figure 13 is a flow chart for a method of determining the residual value using the implementation of the neural network;
Figure 14 illustrates pixel determination logic configured to determine sharpened upsampled pixel values;
Figure 15 is a flow chart for a method of determining a block of sharpened upsampled pixel values;
Figure 16 illustrates a first full sharp upsampling kernel as a result of convolving a bilinear interpolation kernel with a sharpening kernel;
Figure 17 illustrates how the first full sharp upsampling kernel can be deconstructed into: (i) a kernel to be applied to a first input block of input pixel values, and (ii) a kernel to be applied to a second input block of input pixel values, for determining the sharpened upsampled pixel value in the top left of the block of sharpened upsampled pixel values;
Figure 18 illustrates how the first full sharp upsampling kernel can be deconstructed into: (i) a kernel to be applied to the first input block of input pixel values, and (ii) a kernel to be applied to the second input block of input pixel values, for determining the sharpened upsampled pixel value in the bottom right of the block of sharpened upsampled pixel values;
Figure 19 illustrates a full horizontal sharp upsampling kernel as a result of convolving a linear horizontal interpolation kernel with a sharpening kernel;
Figure 20 illustrates a full vertical sharp upsampling kernel as a result of convolving a linear vertical interpolation kernel with a sharpening kernel;
Figure 21 is a flow chart for a method of combining the results of applying kernels to the input blocks to determine a sharpened upsampled pixel value at a location which falls between corresponding locations of the input pixels;
Figure 22 illustrates how the full horizontal sharp upsampling kernel can be deconstructed into: (i) a kernel to be applied to a first input block of input pixel values, and (ii) a kernel to be applied to a second input block of input pixel values, for determining a horizontal component for the sharpened upsampled pixel value in the top right of the block of sharpened upsampled pixel values;
Figure 23 illustrates how the full vertical sharp upsampling kernel can be deconstructed into: (i) a kernel to be applied to a first input block of input pixel values, and (ii) a kernel to be applied to a second input block of input pixel values, for determining a vertical component for the sharpened upsampled pixel value in the top right of the block of sharpened upsampled pixel values;
Figure 24 illustrates how the full horizontal sharp upsampling kernel can be deconstructed into: (i) a kernel to be applied to a first input block of input pixel values, and (ii) a kernel to be applied to a second input block of input pixel values, for determining a horizontal component for the sharpened upsampled pixel value in the bottom left of the block of sharpened upsampled pixel values;
Figure 25 illustrates how the full vertical sharp upsampling kernel can be deconstructed into: (i) a kernel to be applied to a first input block of input pixel values, and (ii) a kernel to be applied to a second input block of input pixel values, for determining a vertical component for the sharpened upsampled pixel value in the bottom left of the block of sharpened upsampled pixel values;
Figure 26 shows a computer system in which a processing module is implemented; and
Figure 27 shows an integrated circuit manufacturing system for generating an integrated circuit embodying a processing module.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. Figure 2 shows input pixel values 202 of input pixels having locations corresponding to a repeating quincunx arrangement of upsampled pixel locations. In this arrangement, half of the upsampled (output) pixel locations (e.g. location 204) are shown with hatching in Figure 2 and correspond to the location of an input pixel; whereas the other half of the upsampled pixel locations (e.g. location 206) are shown without hatching in Figure 2 and do not correspond to the location of an input pixel. The repeating quincunx arrangement can be considered to be a 'chequer board' pattern. The input pixel values 202 are processed, as described herein, to determine a block of upsampled pixel values which includes an upsampled pixel value at some of the upsampled pixel locations shown in Figure 2 which do not correspond to the location of an input pixel. In this way, the density of upsampled pixels is double the density of input pixels. Furthermore, the use of the repeating quincunx arrangement means that output pixel locations that do not correspond to the location of an input pixel (shown without hatching in Figure 2) are horizontally adjacent to two output pixel locations that do correspond to the location of an input pixel (shown with hatching in Figure 2) and are vertically adjacent to two output pixel locations that do correspond to the location of an input pixel (shown with hatching in Figure 2). As such, errors in the output pixel values at those output pixel locations (shown without hatching in Figure 2) that do not correspond to the location of an input pixel can be kept small relative to what might be achievable with a sparser pattern of input pixels, such as only the top-left of every 2x2 block being available. Additionally, upsampling algorithms for a quincunx pattern input can be more regular than those for sparser input patterns, due to the fact that all missing output pixel locations have the same arrangement of neighbouring pixels.

Furthermore, the upsampling process described in examples herein can take account of horizontal variation and vertical variation of the input pixel values. The horizontal and vertical variation of the input pixel values may be indicative of, for example, edges, texture and/or high frequency content in the image region represented by the input pixel values. For example, the relative horizontal and vertical variation of the input pixel values might represent an image gradient within the image region. For example, an edge in an image causes a high image gradient in a direction perpendicular to the edge, but a low image gradient in a direction parallel to the edge. When determining an upsampled pixel value by performing a weighted sum of input pixel values the upsampling process can weight the input pixel values differently according to the image gradients. This can reduce blurring and staircasing artefacts near edges or other anisotropic image features, e.g. compared to when a bilinear upsampling technique is used. Furthermore, the examples described below are efficient to implement, e.g. in hardware, such that they have low latency, low power consumption and small silicon area (when implemented in fixed function hardware).

At least one weighting parameter is determined which is indicative of the weights used in the weighted sums for determining the upsampled pixel values. In examples described herein the weighting parameter(s) are determined using a hand-crafted algorithm. According to the algorithm, four filters are applied to the input pixel values representing an image region to determine four filtered values. In particular, a horizontal edge filter, a vertical edge filter, a horizontal line filter and a vertical line filter are applied to input pixel values to determine four filtered values. The four filtered values can then be used (e.g. combined in a weighted sum) to determine the indication of the weighting parameter(s), which can then be used for applying upsampling to the input pixel values representing the image region. The indication of the weighting parameter(s) could be the weighting parameter(s). The indication of the weighting parameter(s) could be something other than the weighting parameter(s) from which the weighting parameter(s) can be determined. In some examples, there are multiple weighting parameters, and the indication of the weighting parameters may be some but not all of the weighting parameters, wherein the other weighting parameter(s) can be derived from the weighting parameter(s) that are explicitly included in the indication. For example, there may be two weighting parameters (denoted *a* and *b* in the examples given below), and the indication of the weighting parameters may be a value of (only) a first one of the weighting parameters (e.g. the value of *a*), wherein the value of the other weighting parameter (e.g. the value of b) can be derived from the value of the first weighting parameter, e.g. using a predetermined relationship between the values of the two weighting parameters (e.g. it may be known that *a + b* = 1).

The weighting parameter(s) are indicative of relative horizontal and vertical variation of the input pixel values within the image region. The one or more weighting parameters are indicative of a directionality of filtering to be applied when upsampling is applied to the input pixel values.

The use of horizontal and vertical filters for determining the weighting parameter(s) allows the upsampling to be adapted to suit the directionality of the features within the image region being processed. Furthermore, the use of edge filters and line filters for determining the weighting parameter(s) allows the upsampling to be adapted to suit different types of directional features (e.g. edges and lines) within the image region being processed. As such, the use of all four filters can reduce blurring and staircasing artefacts compared to when other upsampling techniques (e.g. bilinear upsampling) are used. Furthermore, logic for applying the four filters and for combining the four filtered values (e.g. by performing a weighted sum) may be implemented very efficiently in hardware, e.g. in fixed-function circuitry, using simple operations such as shifts, additions and multiplications. The methods described herein can be implemented with low latency, low power consumption and small silicon area (e.g. when implemented in fixed function hardware).

In examples described herein, the filters have a zero response to features in the orthogonal direction. In particular, the horizontal edge filter and the horizontal line filter have a zero response to vertical features, and the vertical edge filter and the vertical line filter have a zero response to horizontal features. "Vertical features", such as vertical edges and vertical lines, are constant for different vertical positions, but vary for different horizontal positions; whereas, "horizontal features", such as horizontal edges and horizontal lines, are constant for different horizontal positions, but vary for different vertical positions.

Furthermore, in examples described herein an implementation of a neural network can be used to process the input pixel values to determine a residual value, which can be combined with the filtered values to determine the indication of the weighting parameter(s). The neural network has been trained to determine a residual value such that the weighting parameter(s) are indicative of a directionality of filtering to be applied when upsampling is applied to the input pixel values. Using a neural network to determine the residual value allows the determination of the weighting parameter(s) to adapt to give perceptually good results without needing to categorise any directional variation in the image region as being an edge, a line or a texture or any other particular type of high frequency content. This is advantageous because hand-engineering a system to exploit some or all of these directional cues (e.g. edges, lines, textures, etc.) is difficult and time consuming, and in addition, is liable to miss subtle useful properties of the input region that a suitable neural network is better able to identify and exploit. By using the neural network just to determine the residual values rather than to determine directly the weighting parameters or even the upsampled output pixels themselves, the neural network can be kept small and simple. This means that the implementation of the neural network can be small and simple too, such that it can have a low silicon area, a low latency and low power consumption. In this way, a neural network is used for the part of the process (e.g. the determination of a residual value for use in the determination of the weighting parameter(s)) which benefits the most from being implemented in a neural network, whilst other parts of the process (e.g. the rest of the upsampling and sharpening process) are not implemented using a neural network, so that the neural network does not become too large and complex to implement, e.g. on a low cost device which has tight restrictions on power consumption and silicon area.

In some examples, the input pixel values are received in two input blocks. Figure 3 shows the input pixel values 302 being represented in two input blocks 304 and 306. The first input block 304 comprises the input pixel values of input pixels having locations corresponding to locations within odd rows of the repeating quincunx arrangement of upsampled pixel locations (illustrated with line hatching in Figure 3), and the second input block 306 comprises the input pixel values of input pixels having locations corresponding to locations within even rows of the repeating quincunx arrangement of upsampled pixel locations (illustrated with cross-hatching in Figure 3). Using the two input blocks 304 and 306 means that the inputs are denser than if the input pixel values were received as a block having the repeating quincunx arrangement, as represented as 302 in Figure 3.

The format of the pixel values could be different in different examples. For example, the pixels could be represented with pixel values in YUV format (in which each pixel has a value in each of Y, U and V channels), and upsampling may be applied to each of the Y, U and V channels separately. The upsampling described herein may be applied to just the Y channel, with the upsampling of the U and V channels being performed in a simpler manner, e.g. using bilinear interpolation. In other words, in some examples, the input pixel values and the upsampled pixel values are Y channel values, and the upsampling of the Y channel values may be for use in a super resolution technique. In other examples, the upsampling described herein may be applied to each of the Y, U and V channels. In yet other examples, results from some or all of the computation (e.g. of contrast or weighting parameters) from processing Y pixel values may be applied to U and V channels to save computation and promote consistency of reconstructed edges. If the input pixel data is in RGB format then it could be converted into YUV format (e.g. using a known colour space conversion technique) and then processed as data in Y, U and V channels. Alternatively, if the input pixel data is in RGB format (in which each pixel has a value in each of R, G and B channels) then the techniques described herein could be implemented on the R, G and B channels as described herein, wherein the G channel may be considered to be a proxy for the Y channel. If the input data includes an alpha channel then upsampling (e.g. using bilinear interpolation) may be applied to the alpha channel separately.

Furthermore, the upsampling described herein may be used as part of a demosaicing technique. Demosaicing is a known technique and may be implemented, for example in a camera pipeline or on a graphics processing unit (GPU). There may be multiple channels for pixel values of pixels, e.g. pixels may have pixel values in Red, Green and Blue channels. In some situations, each pixel might have a pixel value in at least one, but not all of the channels, and the aim of a demosaicing process is often to determine pixel values in all of the channels for all of the pixels. For example, an image sensor might detect pixel values using a colour filter array. An example of a typical colour filter array is a Bayer filter in which Green pixel values are detected for pixels in a quincunx arrangement (or chequer board pattern), and Red pixel values are detected for half of the remaining pixels and Blue pixel values are detected for the other half of the remaining pixels. The upsampling described herein may be applied to the pixel values within a channel (e.g. the Green channel) to determine pixel values in that channel (e.g. Green pixel values) for all of the pixels. The remaining pixel values in the other channels (e.g. the Red and Blue pixel values) can be determined for all of the pixels using some other method, which may (or may not) be based on the upsampled (e.g. Green) pixel values for the pixels. In other words, in some examples, the input pixel values and the upsampled pixel values are Green channel values, and the upsampling of the Green channel values may be for use in a demosaicing technique.

In examples described herein, the input pixels may be represented by values in multiple channels, and the upsampled pixels may be represented by values in multiple channels. The upsampling in examples described herein is applied to input pixel values which are values of the input pixels in a single channel, and the upsampled pixel values are values of the upsampled pixels in said single channel. For example, the upsampling may be applied to the Y pixel values in a super resolution technique or to the Green pixel values in a demosaicing technique. In the examples in which the upsampling is applied to pixel values of a particular channel as part of a demosaicing technique, the upsampling increases the number of pixel positions at which pixel values exist for the particular channel. It is noted that the overall demosaicing process does not change the total number of sample positions: instead, it changes what is represented at each sample position, e.g. it may change each single-colour sample point to a full RGB sample point. Upsampling may be considered to be interpolation.

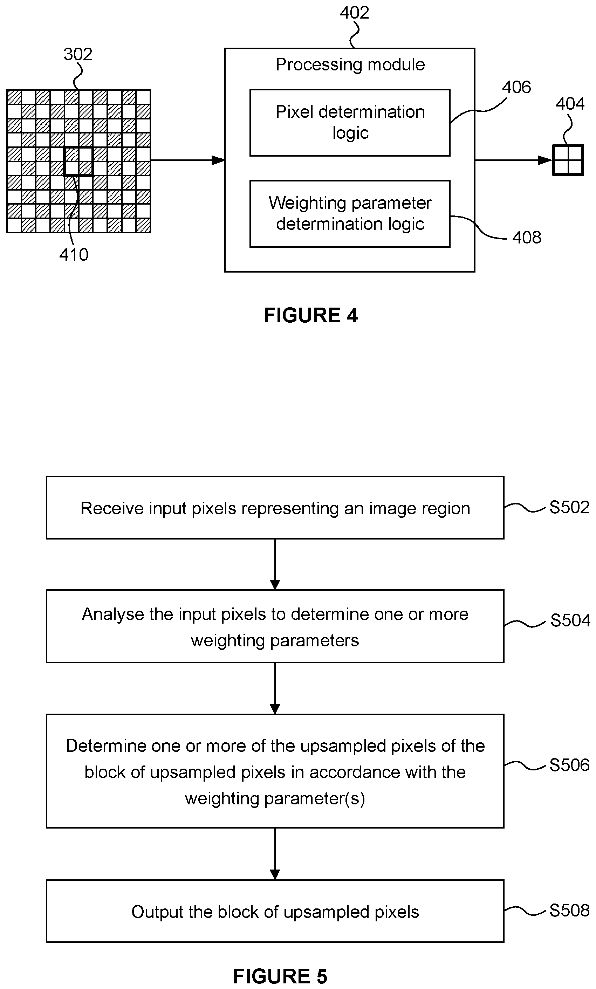

Figure 4 shows a processing module 402 configured to apply upsampling to input pixel values 302, which represent an image region, to determine a block of upsampled pixel values 404, e.g. for use in implementing a super resolution technique. The block of upsampled pixel values 404 represents a location within the image region indicated with the square 410 in Figure 4. In this example, the input pixel values 302 are values of input pixels having locations corresponding to a 10x10 block of upsampled pixel locations, and the block of upsampled pixel values 404 is a 2x2 block of upsampled pixel values representing the central 2x2 portion of the 10x10 block of upsampled pixel locations. However, it is noted that in other examples the shapes and/or sizes of the image region represented by the input pixel values and the block of upsampled pixel values may be different. In some examples, the block of upsampled pixel values may have a single upsampled pixel value, so although we refer to a block of upsampled pixel values in the main examples described herein, more generally we may refer to a block of one or more upsampled pixel values. The processing module 402 comprises pixel determination logic 406 and weighting parameter determination logic 408. The logic of the processing module 402 may be implemented in hardware, software, or a combination thereof. A hardware implementation normally provides for a reduced latency and power consumption and higher throughput compared to a software implementation, at the cost of inflexibility of operation. The processing module 402 is likely to be used in the same manner a large number of times on each image being upsampled, and since latency is very important in, for example, real time super resolution applications, it is likely that implementing the logic of the processing module 402 in hardware (e.g. in fixed function circuitry) will be preferable to implementing the logic in software. However, a software implementation is still possible and may be preferable in some situations (for example, where there is insufficient microchip area to include additional fixed-function hardware).

Rather than using bilinear upsampling (which is the most common conventional upsampling approach), the processing module 402 performs upsampling which is dependent upon relative horizontal and vertical variation of the input pixel values 302 within the image region. In this way, the upsampling takes account of anisotropic features (e.g. edges) in the image, to reduce 'staircasing' and 'crenulation' artefacts and blurring that can occur near anisotropic features (e.g. edges, particularly diagonal edges of computer-generated images), compared to the case where bilinear upsampling is used.

A method of using the processing module 402 to apply upsampling to the input pixel values 302 to determine the block of one or more upsampled pixel values 404, e.g. for use in implementing a super resolution technique, is described with reference to the flow chart of Figure 5.

In step S502 the input pixel values 302 are received at the processing module 402. In the main examples described herein the input pixel values 302 are represented in two input blocks 304 and 306, as shown in Figure 3. However, in other examples the input pixel values are not necessarily represented in two input blocks, e.g. they may be represented in a single block. As described above, the input pixel values 302 are values of input pixels having locations corresponding to a repeating quincunx arrangement (or 'chequer board pattern') of upsampled pixel locations, wherein the first input block 304 ('input block 1') comprises the input pixel values for input pixels having locations corresponding to locations within odd rows of the repeating quincunx arrangement of upsampled pixel locations (illustrated with line hatching in Figure 3), and the second input block 306 ('input block 2') comprises the input pixel values for input pixels having locations corresponding to locations within even rows of the repeating quincunx arrangement of upsampled pixel locations (illustrated with cross-hatching in Figure 3). The input blocks can be considered to be low resolution representations of the image region represented by the input pixel values. In the examples described herein, each of the input blocks is a 5x5 block of input pixel values, and the block of upsampled pixel values is a 2x2 block of upsampled pixel values, but in other examples, the input blocks and the block of upsampled pixel values may have different shapes and/or sizes.

The origin of the input pixel values does not affect the upsampling process described herein. For example, the input pixel values may be captured (e.g. by a camera) or may be computer-generated (e.g. rendered by a Graphics Processing Unit (GPU) to represent an image of a scene using a rendering technique such as rasterization or ray tracing). For example, a GPU may render all of the input pixel values for the image region, i.e. all of the input pixel values in the repeating quincunx arrangement shown in Figure 4. In this example, the upsampling will double the number of pixel values. Therefore, in this example, the GPU can render the pixel values for half the number of pixels in the final (upsampled) image, which allows the GPU to have reduced latency, power consumption and/or silicon area compared to a GPU that renders the pixel values for all of the pixels of the final image.

As another example, a sequence of frames may be rendered, e.g. representing images of a scene at a sequence of time instances. For example, this may be useful for rendering images for a computer game as a user interacts with a scene. In this example, on each frame of the sequence of frames, the input pixel values of just one of the input blocks (304 or 306) are rendered, with the input block that is rendered alternating over the sequence of frames. Usually, a current frame will be very similar to a previous frame (e.g. the immediately preceding frame), and a process of temporal resampling can be performed to estimate input pixel values for some of the input pixels for the current frame based on the rendered pixel values of the previous frame. As known to those skilled in the art, a temporal resampling process can use motion vectors to estimate input pixel values for a current frame based on rendered pixel values of the previous frame. In this way, when the image region represented by the input pixel values 302 is part of a current frame within the sequence of frames, the input pixel values of the first of the input blocks 304 may be rendered for the current frame, whereas the input pixel values of the second of the input blocks 306 may be determined by performing temporal resampling on pixel values of a previous frame using motion vectors. In examples which use temporal resampling to determine input pixel values for half of the input pixels for each frame, the number of input pixel values that are rendered by a GPU for each frame is a quarter of the number of pixel values in the final (upsampled) image, which allows the GPU to have even further reduced latency, power consumption and/or silicon area compared to a GPU that renders the pixel values for half of the pixels of the final image for each frame.

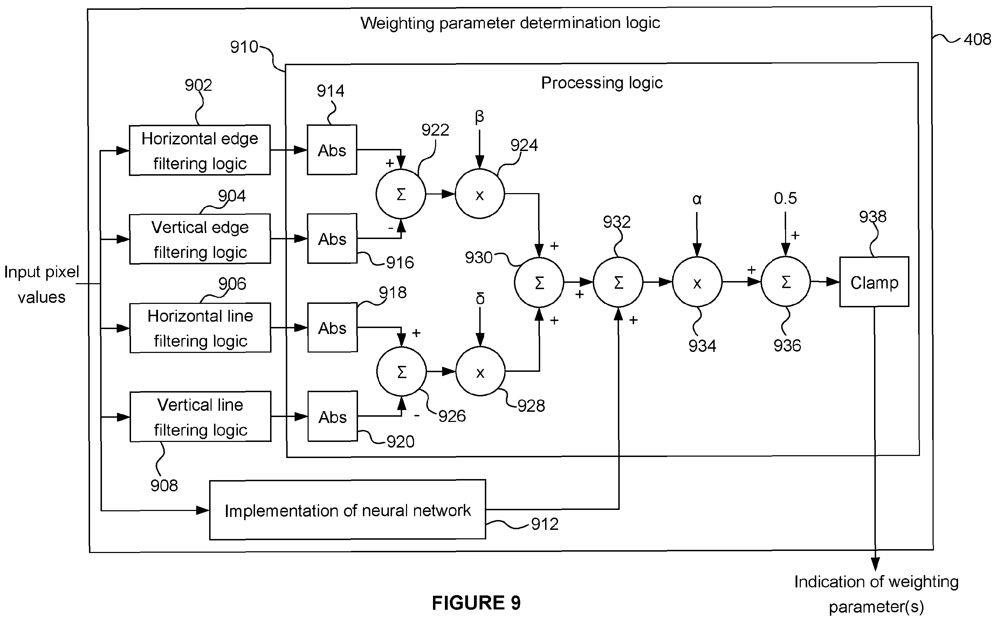

In step S504 the weighting parameter determination logic 408 analyses the input pixel values 302 to determine one or more weighting parameters. The one or more weighting parameters are indicative of relative horizontal and vertical variation of the input pixels 302 within the image region. As such, the weighting parameters may be referred to as directional weighting parameters. As mentioned above, the one or more weighting parameters may be considered to be indicative of a directionality of filtering to be applied when upsampling is applied to the input pixel values. For example, two weighting parameters (*a* and *b*) may be determined in step S504. The weighting parameters may be normalised, so that *a* + *b* = 1. This means that as one of a or *b* increases the other decreases. As will become apparent from the description below, if the parameters are set such that *a* = *b* = 0.5 then the system will give the same outputs as a bilinear upsampler. However, in the system described herein, *a* and *b* can be different, i.e. we can have *a* ≠ *b*. Furthermore, since *b* = 1 - *a*, the weighting parameter determination logic 408 might output an indication of a single weighting parameter, e.g. *a*, and this can be used to determine the second weighting parameter, *b*, as 1 - *a*. An indication of the one or more weighting parameters is provided to the pixel determination logic 406. Further details of the way in which the weighting parameter determination logic 408 determines the one or more weighting parameters are given below with reference to the examples shown in Figures 9 to 13.

In step S506 the pixel determination logic 406 determines one or more of the upsampled pixel values of the block of upsampled pixels 404 in accordance with the determined one or more weighting parameters.

In step S508 the block of upsampled pixel values 404 is output from the pixel determination logic 406. In some systems this could be the end of the processing on the block of upsampled pixel values 404 and it could be output from the processing module 402 as shown in Figure 4. In other examples, e.g. as described below, sharpening may be applied to the upsampled pixel values (e.g. by blending with sharpened upsampled pixel values) before they are output from the processing module.

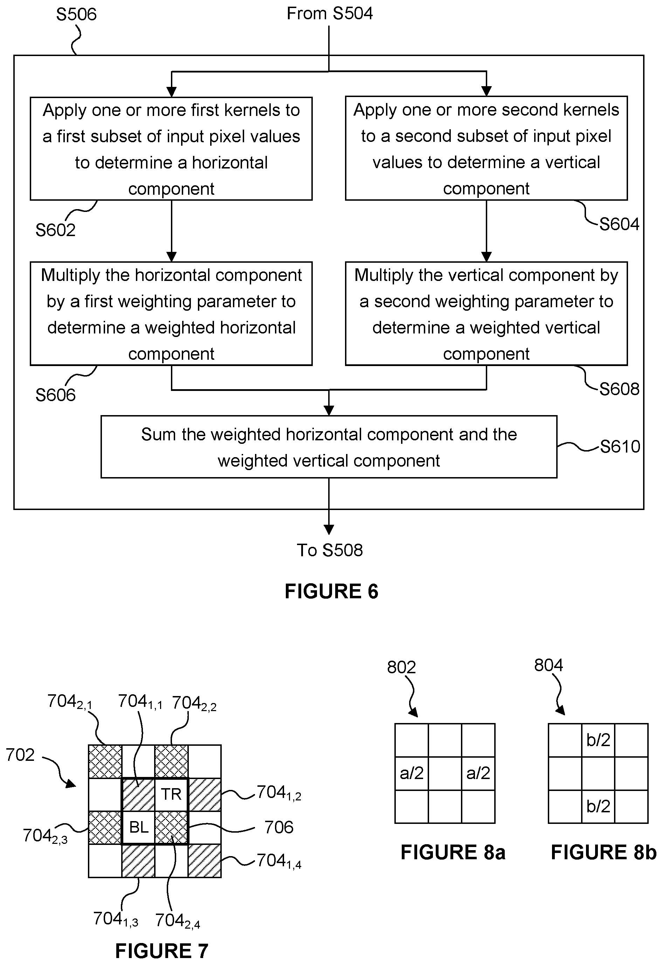

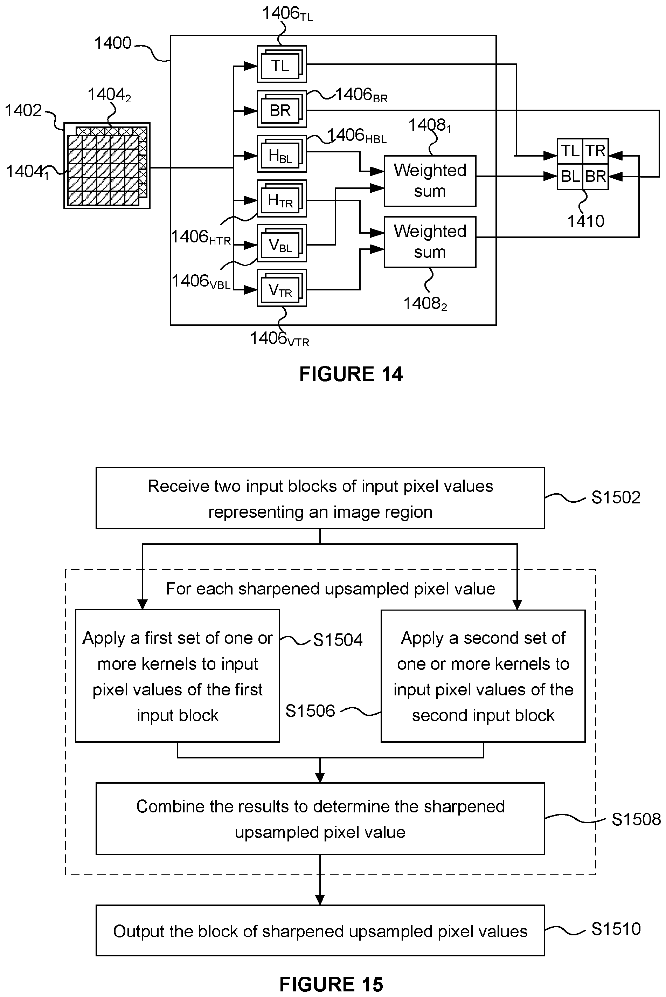

Figure 6 is a flow chart showing how the pixel determination logic 406 can determine an unsharpened upsampled pixel value in step S506 in accordance with the weighting parameter(s), e.g. so that the upsampled pixel values are determined in accordance with the relative horizontal and vertical variation of the input pixel values within the image region. Figure 7 shows a portion of the input pixel values 702 and illustrates how the location of a block of upsampled pixel values 706 relates to the locations of the input pixels 704. Each of the upsampled pixel values that is determined in accordance with the relative horizontal and vertical variation of the input pixels within the image region (i.e. in accordance with the determined one or more weighting parameters), in step S506, is at a respective upsampled pixel location which does not correspond with the location of any of the input pixels. In other words the top right and the bottom left upsampled pixel values in the block of upsampled pixel values (denoted "TR" and "BL" in Figure 7) are determined in step S506 in accordance with the relative horizontal and vertical variation of the input pixels within the image region (i.e. in accordance with the determined one or more weighting parameters). If no sharpening is being applied then the input pixel values for input pixels having locations corresponding to the repeating quincunx arrangement of upsampled pixel locations are used as the upsampled pixel values at those upsampled pixel locations of the block of upsampled pixel values (e.g. the input pixels at the top left and bottom right locations of the block of upsampled pixel values 706 are "passed through" to the corresponding locations in the output block). If sharpening is applied then some processing is performed on the input pixel values to determine all of the upsampled pixel values in the block of upsampled pixel values, as described in more detail below with reference to Figures 14 to 25.

As described above, the input pixel values 704 are represented in two input blocks (e.g. 304 and 306). In Figure 7, input pixel values 704_{1,1}, 704_{1,2}, 704_{1,3} and 704_{1,4}, which are shown with line hatching, are part of the first input block 304; whereas input pixel values 704_{2,1}, 704_{2,2}, 704_{2,3} and 704_{2,4}, which are shown with cross hatching, are part of the second input block 306.

As shown in Figure 6, step S506 of determining each of said one or more of the upsampled pixel values comprises applying one or more kernels to at least some of the input pixel values in accordance with the determined one or more weighting parameters. In particular, in step S602 the pixel determination logic 406 applies one or more first kernels (which may be referred to as horizontal kernels) to at least a first subset of the input pixel values to determine a horizontal component. For example, a kernel of [0.5,0.5] can be applied to the input pixel values which are horizontally adjacent and either side of the upsampled pixel location for which an upsampled pixel value is being determined. For example, when step S602 is performed for the upsampled pixel value denoted "TR" in Figure 7 then the horizontal kernel is applied to pixel values 704_{1,1} and 704_{1,2} from input block 1. When step S602 is performed for the upsampled pixel value denoted "BL" in Figure 7 then the horizontal kernel is applied to pixel values 704_{2,3} and 704_{2,4} from input block 2.

In step S604 the pixel determination logic 406 applies one or more second kernels (which may be referred to as vertical kernels) to at least a second subset of the input pixel values to determine a vertical component. For example, a kernel of $\left[\begin{matrix}0.5 \\ 0.5\end{matrix}\right]$ can be applied to the input pixel values which are vertically adjacent and either side of the upsampled pixel location for which an upsampled pixel value is being determined. For example, when step S604 is performed for the upsampled pixel value denoted "TR" in Figure 7 then the vertical kernel is applied to pixel values 704_{2,2} and 704_{2,4} from input block 2. When step S604 is performed for the upsampled pixel value denoted "BL" in Figure 7 then the vertical kernel is applied to pixel values 704_{1,1} and 704_{1,3} from input block 1.

It is noted that each of the one or more of the upsampled pixel values for which step S506 is performed has two horizontally adjacent pixel values which are both from the same input block (either from input block 1 or input block 2) and has two vertically adjacent pixel values which are both from the other input block (either from input block 2 or input block 1). It is also noted that steps S602 and S604 may be performed in any order, e.g. sequentially, or may be performed in parallel.

In steps S606 to S610 the pixel determination logic 406 combines the determined horizontal and vertical components, such that each of said one or more of the upsampled pixel values is determined in accordance with the relative horizontal and vertical variation of the input pixel values within the image region as indicated by the one or more weighting parameters determined in step S504. In particular, in step S606 the pixel determination logic 406 multiplies the horizontal component (determined in step S602) by a first of the weighting parameters, *a*, to determine a weighted horizontal component.

In step S608 the pixel determination logic 406 multiplies the vertical component (determined in step S604) by a second of the weighting parameters, b, to determine a weighted vertical component. Steps S606 and S608 may be performed in any order, e.g. sequentially, or may be performed in parallel.

In step S610 the pixel determination logic 406 sums the weighted horizontal component and the weighted vertical component to determine the upsampled pixel value. In some examples, the kernels applied in S602 and S604 may be multiplied by the first and second weighting parameters respectively before, or during, application to the input pixel values. This is expected to be less power- and area-efficient in hardware than the method described with reference to Figure 6, since the application of kernels of Figures 8a and 8b may be obtained using only cheap fixed bit shifts and additions, and the number of variable multiplies required is considerably lower.

Figure 8a shows a 3x3 kernel 802 (which may be implemented as a 1x3 kernel) which can be applied to the input pixel values 702 to represent the effect of performing steps S602 and S606 for an upsampled pixel location being determined. For example, the kernel 802 could be centred on the upsampled pixel value being determined and applied to the input pixel values 702 such that the result would be given by the dot product $\left[\frac{a}{2}, \frac{a}{2}\right]$*. **h**,* where *h* is a vector of the horizontally adjacent pixel values. For example, if the upsampled pixel value denoted "TR" is being determined then ***h*** = [*p*_{1,1},*p*_{1,2}], where *p*_{1,1} is the input pixel value 704_{1,1} and *p*_{1,2} is the input pixel value 704_{1,2}. Similarly, if the upsampled pixel value denoted "BL" is being determined then ***h*** = [*p*_{2,3},*p*_{2,4}], where *p*_{2,3} is the input pixel value 704_{2,3} and *p*_{2,4} is the input pixel value 704_{2,4}.

Similarly, Figure 8b shows a 3x3 kernel 804 (which may be implemented as a 3x1 kernel) which can be applied to the input pixel values 702 to represent the effect of performing steps S604 and S608 for an upsampled pixel location being determined. For example, the kernel 804 could be centred on the upsampled pixel value being determined and applied to the input pixel values 702 such that the result would be given by the dot product $\left[\frac{b}{2}, \frac{b}{2}\right]$. ***v***, where ***v*** is a vector of the vertically adjacent pixel values. For example, if the upsampled pixel value denoted "TR" is being determined then ***v*** = [*p*_{2,2}, *p*_{2,4}], where *p*_{2,2} is the input pixel value 704_{2,2} and *p*_{2,4} is the input pixel value 704_{2,4}. Similarly, if the upsampled pixel value denoted "BL" is being determined then ***v*** = [*p*_{1,1},*p*_{1,3}], where *p*_{1,1} is the input pixel value 704_{1,1} and *p*_{1,3} is the input pixel value 704_{1,3}.

As such, steps S602 to S610 can be summarised as determining the upsampled pixel values denoted TR and BL as the sum of dot products: $\left[\frac{a}{2}, \frac{a}{2}\right] . h + \left[\frac{b}{2}, \frac{b}{2}\right] . v$, where ***h*** and ***v*** are vectors of adjacent pixel values as described above for the TR and BL pixel values respectively.

The values of the weighting parameters, *a* and *b*, are set in dependence on the local context, such that by determining the upsampled pixel values in step S506 in accordance with the determined weighting parameters the upsampled pixel values are determined in accordance with the relative horizontal and vertical variation of the input pixel values within the image region. In this way, the weighting parameters can be used to reduce artefacts and blurring over anisotropic features (e.g. edges) in the image, which may otherwise result from an upsampling process. As described above the weighting parameter determination logic 408 analyses the input pixel values in step S504 to determine the one or more weighting parameters. In this way the one or more weighting parameters are determined for the particular image region being processed, such that different weighting parameters can be used in the upsampling process for different image regions. In other words, the weighting parameters can be adapted to suit the particular local context of the image region for which upsampled pixel values are being determined. This allows suitable weighting parameters to be used for different image regions based on the different anisotropic image features present in the different image regions. Further details of the way in which the weighting parameter determination logic 408 determines the one or more weighting parameters are given below with reference to the examples shown in Figures 9 to 13.

Figure 9 illustrates an example of the weighting parameter determination logic 408, which is configured to determine an indication of one or more weighting parameters. As described above the weighting parameter determination logic 408 is implemented on a processing module 402. The weighting parameter determination logic 408 comprises horizontal edge filtering logic 902, vertical edge filtering logic 904, horizontal line filtering logic 906 and vertical line filtering logic 908, which are all configured to receive the input pixel values. The weighting parameter determination logic 408 further comprises processing logic 910 and an implementation of a neural network 912. The implementation of the neural network 912 is configured to receive the input pixel values. The processing logic 910 is configured to receive filtered values from the four elements of filtering logic (902, 904, 906 and 908) and to receive an output (a residual value, as described below) from the implementation of the neural network 912. The processing logic 910 is configured to use the filtered values (and in some examples also the residual value) to determine the indication of the one or more weighting parameters. In particular, the processing logic 910 comprises four blocks of absolute value determination logic 914, 916, 918 and 920, five blocks of summation logic 922, 926, 930, 932 and 936, three blocks of multiplication logic 924, 928 and 934, and clamping logic 938.

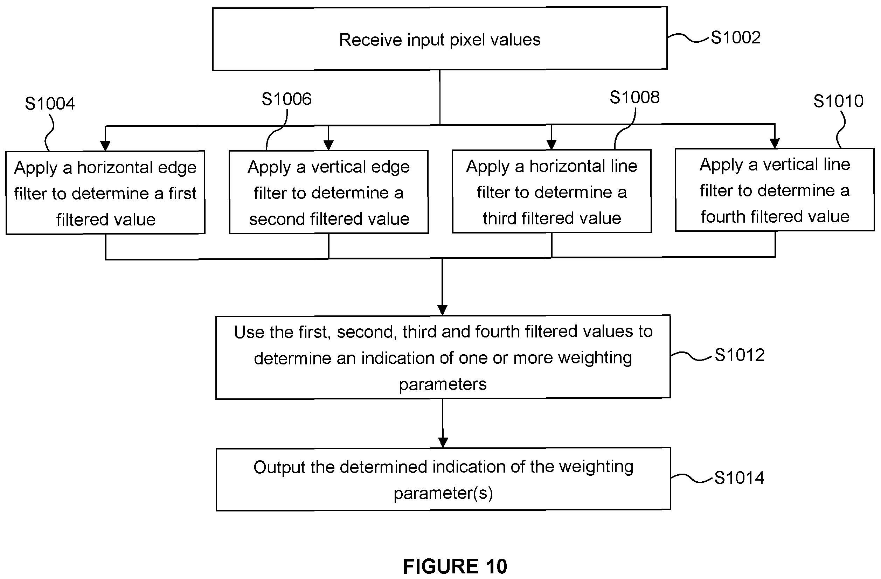

Figure 10 is a flow chart for a method of determining an indication of the weighting parameter(s) using the weighting parameter determination logic 408. In step S1002 the input pixel values are received at the weighting parameter determination logic 408. The input pixel values are values of input pixels having locations corresponding to a repeating quincunx arrangement of upsampled pixel locations, e.g. as described above in relation to Figures 2 and 3, which show the input pixel values having locations corresponding to a repeating quincunx arrangement of upsampled pixel locations. The repeating quincunx arrangement can be considered to be a 'chequer board' pattern. Furthermore, as described above with reference to Figure 3, the input pixel values may be represented in two input blocks, wherein one of the two input blocks comprises the input pixel values of input pixels having locations corresponding to locations within odd rows of the repeating quincunx arrangement of upsampled pixel locations, and the other of the two input blocks comprises the input pixel values of input pixels having locations corresponding to locations within even rows of the repeating quincunx arrangement of upsampled pixel locations.

In steps S1004, S1006, S1008 and S1010 the four filters (a horizontal edge filter, a vertical edge filter, a horizontal line filter and a vertical line filter) are applied to the input pixel values. Steps S1004, S1006, S1008 and S1010 may be performed in any order and/or two or more (or possibly all) of steps S1004, S1006, S1008 and S1010 may be performed in parallel. In examples described below, each of the filters has a filter kernel with weights at input pixel locations corresponding to a 5x5 region of upsampled pixel locations centred on an upsampled pixel location which falls between the locations of adjacent input pixels in the quincunx arrangement, although in other examples the filter kernels may have different sizes and/or shapes. Having larger filter kernels (i.e. applying the filters to a larger set of pixel value locations) to derive orientation information from a wider region may be considered to be beneficial but may risk swamping the signal from closer pixels (which may be more relevant). As such, there is a trade-off in determining the size of the filter kernels. For example, the filter kernels may correspond to a 6x6 or 7x7 region of upsampled pixel locations.

In step S1004, the horizontal edge filtering logic 902 applies a horizontal edge filter to two or more of the input pixel values to determine a first filtered value. Where an edge is present within an image, an image gradient is generally perpendicular to the orientation of the edge. For example, around a horizontal edge the image gradient is generally vertical; and around a vertical edge the image gradient is generally horizontal. An edge filter is configured to identify an edge within an image region, i.e. to identify an image gradient in a particular direction within the image region. An edge filter represents an odd function. In particular, a horizontal edge filter is configured to identify a horizontal edge within an image region to which the horizontal edge filter is applied. Ideally, a horizontal edge filter will provide a response with a larger magnitude when the magnitude of the vertical image gradient within the image region is larger; whereas ideally a horizontal edge filter will not depend upon the horizontal image gradient within the image region. As an example, the horizontal edge filter may have a 5x5 filter kernel with weights that can be represented as:

| | | | | |
|---|---|---|---|---|
| | 0.5 | | 0.5 | |
| 0 | | 1 | | 0 |
| | 0 | | 0 | |
| 0 | | -1 | | 0 |
| | -0.5 | | -0.5 | |

As another example, the horizontal edge filter may have a filter kernel with weights that can be represented as:

| | | | | |
|---|---|---|---|---|
| | 0 | | 0 | |
| 0 | | 1 | | 0 |
| | 0 | | 0 | |
| 0 | | -1 | | 0 |
| | 0 | | 0 | |

In step S1006, the vertical edge filtering logic 904 applies a vertical edge filter to two or more of the input pixel values to determine a second filtered value. The two or more of the input pixel values that the vertical edge filter is applied to in step S1006 may or may not be the same input pixel values as the two or more input pixel values that the horizontal edge filter is applied to in step S1004. A vertical edge filter is configured to identify a vertical edge within an image region to which the vertical edge filter is applied. Ideally, a vertical edge filter will provide a response with a larger magnitude when the magnitude of the horizontal image gradient within the image region is larger; whereas ideally a vertical edge filter will not depend upon the vertical image gradient within the image region. As an example, the vertical edge filter may have a 5x5 filter kernel with weights that can be represented as:

| | | | | |
|---|---|---|---|---|
| | 0 | | 0 | |
| -0.5 | | 0 | | 0.5 |
| | -1 | | 1 | |
| -0.5 | | 0 | | 0.5 |
| | 0 | | 0 | |

As another example, the vertical edge filter may have a filter kernel with weights that can be represented as:

| | | | | |
|---|---|---|---|---|
| | 0 | | 0 | |
| 0 | | 0 | | 0 |
| | -1 | | 1 | |
| 0 | | 0 | | 0 |
| | 0 | | 0 | |

In step S1008, the horizontal line filtering logic 906 applies a horizontal line filter to three or more of the input pixel values to determine a third filtered value. The three or more of the input pixel values that the horizontal line filter is applied to in step S1008 may or may not include the two or more input pixel values that the horizontal edge filter is applied to in step S1004 and/or the two or more input pixel values that the vertical edge filter is applied to in step S1006. A line filter is configured to identify a line within an image region, i.e. to identify that within the image region there is an image gradient in a particular direction that varies significantly (e.g. changes sign) as the position within the image region varies in the particular direction. A line filter represents an even function. In particular, a horizontal line filter is configured to identify a horizontal line within an image region to which the horizontal line filter is applied. Ideally, a horizontal line filter will provide a response with a larger magnitude when the vertical image gradient varies to a larger extent at different vertical positions within the image region. In particular, ideally, a horizontal line filter will provide a response with a larger magnitude when the difference is larger between the vertical image gradient towards the top of the image region and the vertical image gradient towards the bottom of the image region. For example, a horizontal line filter will typically provide a response with a large magnitude when the sign of the vertical image gradient towards the top of the image region is different to the sign of the vertical image gradient towards the bottom of the image region. However, ideally, an output of a horizontal line filter will not depend upon variation in image gradient at different horizontal positions within the image region. Furthermore, ideally, an output of a horizontal line filter will not depend upon a constant image gradient in the horizontal direction. As an example, the horizontal line filter may have a 5x5 filter kernel with weights that can be represented as:

| | | | | |
|---|---|---|---|---|
| | -0.5 | | -0.5 | |
| 0 | | 0 | | 0 |
| | 1 | | 1 | |
| 0 | | 0 | | 0 |
| | -0.5 | | -0.5 | |

In step S1010, the vertical line filtering logic 908 applies a vertical line filter to three or more of the input pixel values to determine a fourth filtered value. The three or more of the input pixel values that the vertical line filter is applied to in step S1010 may or may not be the same input pixel values as the three or more input pixel values that the horizontal line filter is applied to in step S1008, and may or may not include the two or more input pixel values that the horizontal edge filter is applied to in step S1004 and/or the two or more input pixel values that the vertical edge filter is applied to in step S1006. A vertical line filter is configured to identify a vertical line within an image region to which the vertical line filter is applied. Ideally, a vertical line filter will provide a response with a larger magnitude when the horizontal image gradient varies to a larger extent at different horizontal positions within the image region. In particular, ideally, a vertical line filter will provide a response with a larger magnitude when the difference is larger between the horizontal image gradient towards the left of the image region and the horizontal image gradient towards the right of the image region. For example, a vertical line filter will typically provide a response with a large magnitude when the sign of the horizontal image gradient towards the left of the image region is different to the sign of the horizontal image gradient towards the right of the image region. However, ideally, an output of a vertical line filter will not depend upon variation in image gradient at different vertical positions within the image region. Furthermore, ideally, an output of a vertical line filter will not depend upon a constant image gradient in the vertical direction. As an example, the vertical line filter may have a 5x5 filter kernel with weights that can be represented as:

| | | | | |
|---|---|---|---|---|
| | 0 | | 0 | |
| -0.5 | | 1 | | -0.5 |
| | 0 | | 0 | |
| -0.5 | | 1 | | -0.5 |
| | 0 | | 0 | |

The kernels have weights corresponding to the input pixel locations in the quincunx arrangement. The application of the kernels to input pixel values involves performing multiplications (of input pixel values with corresponding kernel weights) and additions. It is noted that in the examples given above, many of the weights are zero. In particular, applying each of the example kernels shown above to the input pixel values involves performing six multiplications and an addition. Multiplication and addition operations are very efficient to implement, e.g. using Multiply and Accumulate (MAC) operations. In particular, multiplication and addition operations may be implemented in hardware, e.g. in fixed-function circuitry (e.g. in fused multiply-add (FMA) logic), with very low silicon area, power consumption and latency.

The horizontal edge filter, the vertical edge filter, the horizontal line filter and the vertical line filter have a zero response to features in the orthogonal direction. It is relatively simple to configure an edge filter to have a zero response to features in the orthogonal direction (i.e. it is simple for a horizontal edge filter to have a zero response to vertical features, and for a vertical edge filter to have a zero response to horizontal features) because edge filters represent an odd function. In contrast, a line filter represents an even function, and as such it is not so simple to configure a line filter so that when it is applied to the quincunx pattern of input pixel values it has a zero response to features in the orthogonal direction. However, the line filters shown above do have a zero response to features purely in the orthogonal direction, e.g. the horizontal line filter shown above is configured such that all columns of weights sum to zero, and the vertical line filter shown above is such that all rows of weights sum to zero. In other words, the horizontal line filter is configured so as to determine the third filtered value to be zero when the three or more of the input pixel values that the horizontal line filter is applied to exhibit purely vertical features, and wherein the vertical line filter is configured so as to determine the fourth filtered value to be zero when the three or more of the input pixel values that the vertical line filter is applied to exhibit purely horizontal features. Purely vertical features, such as vertical edges and vertical lines, are constant for different vertical positions within the image region, but vary for different horizontal positions within the image region. Purely horizontal features, such as horizontal edges and horizontal lines, are constant for different horizontal positions within the image region, but vary for different vertical positions within the image region.

In step S1012 the processing logic 910 uses the first, second, third and fourth filtered values (determined in steps S1004, S1006, S1008 and S1010) to determine the indication of one or more weighting parameters. As described above, the one or more weighting parameters are indicative of relative horizontal and vertical variation of the input pixel values within the image region. As is apparent from the description herein, the one or more weighting parameters are indicative of a directionality of filtering to be applied when upsampling is applied to the input pixel values.

In step S1014 the processing logic 910 outputs the determined indication of the one or more weighting parameters (e.g. the value of *a*). The indication of the one or more weighting parameters is output from the weighting parameter determination logic 408 and provided to the pixel determination logic 406 for use in applying upsampling to the input pixel values representing the image region to determine a block of one or more upsampled pixel values, as described herein.

In some examples, one or more of the filters, e.g. the line filters, may be implemented using a plurality of filter kernels. The different filter kernels can each be applied to the image region and the outputs of the filter kernels may be combined (e.g. by finding a weighted sum of the absolute values of the outputs of the filter kernels) to determine an output of the respective filter. In one example, 6x6 filter kernels are applied to an image region centred on a 2x2 block of upsampled pixel locations, wherein the filter kernels are configured to determine filtered values for a top right upsampled pixel location and a bottom left upsampled pixel location of the 2x2 block of upsampled pixel locations. For example, the following six filter kernels centred on a 2x2 block of upsampled pixel locations (shown with bold borders in the kernels below) may be applied to determine filtered values for the vertical line filter for the top right upsampled pixel location (denoted "TR" in the kernels below) and the bottom left upsampled pixel location (denoted "BL" in the kernels below) of the 2x2 block of upsampled pixel locations:

| | | | | | |
|---|---|---|---|---|---|
| -0.5 | | 1 | | -0.5 | |
| | 0 | | 0 | | 0 |
| 0 | | 0 | TR | 0 | |
| | 0 | BL | 0 | | 0 |
| 0 | | 0 | | 0 | |
| | 0 | | 0 | | 0 |

### Kernel 0

| | | | | | |
|---|---|---|---|---|---|
| 0 | | 0 | | 0 | |
| | -0.5 | | 1 | | -0.5 |
| 0 | | 0 | TR | 0 | |
| | 0 | BL | 0 | | 0 |
| 0 | | 0 | | 0 | |
| | 0 | | 0 | | 0 |

### Kernel 1

| | | | | | |
|---|---|---|---|---|---|
| 0 | | 0 | | 0 | |
| | 0 | | 0 | | 0 |
| -0.5 | | 1 | TR | -0.5 | |
| | 0 | BL | 0 | | 0 |
| 0 | | 0 | | 0 | |
| | 0 | | 0 | | 0 |

### Kernel 2

| | | | | | |
|---|---|---|---|---|---|
| 0 | | 0 | | 0 | |
| | 0 | | 0 | | 0 |
| 0 | | 0 | TR | 0 | |
| | -0.5 | BL | 1 | | -0.5 |
| 0 | | 0 | | 0 | |
| | 0 | | 0 | | 0 |

### Kernel 3

| | | | | | |
|---|---|---|---|---|---|
| 0 | | 0 | | 0 | |
| | 0 | | 0 | | 0 |
| 0 | | 0 | TR | 0 | |
| | 0 | BL | 0 | | 0 |
| -0.5 | | 1 | | -0.5 | |
| | 0 | | 0 | | 0 |

### Kernel 4

| | | | | | |
|---|---|---|---|---|---|
| 0 | | 0 | | 0 | |
| | 0 | | 0 | | 0 |
| 0 | | 0 | TR | 0 | |
| | 0 | BL | 0 | | 0 |
| 0 | | 0 | | 0 | |
| | -0.5 | | 1 | | -0.5 |

### Kernel 5

The outputs from the six filter kernels shown above can be used to determine the filtered value for the vertical line filter for the top right upsampled pixel location (denoted "TR") and the bottom left upsampled pixel location (denoted "BL") of the 2x2 block of upsampled pixel locations, e.g. by finding a weighted sum of the absolute values of the outputs of the filter kernels. For example, the filtered value for the vertical line filter for the top right upsampled pixel location (denoted "TR") of the 2x2 block of upsampled pixel locations can be determined by combining the outputs of kernels 0, 1, 3 and 5 (e.g. by setting the weights for the outputs from kernels 2 and 4 to be zero in the weighted sum, and setting the weights for the outputs from kernels 0, 1, 3 and 5 to be non-zero in the weighted sum). The weights for the outputs from kernels 0 and 5 may be equal. The weights for the outputs from kernels 1 and 3 may be equal. The weights for the outputs from kernels 1 and 3 may be larger than the weights for the outputs from kernels 0 and 5. The sum of the weights for the outputs from all six of the kernels may be 1, such that the weighted sum is normalised.

As another example, the filtered value for the vertical line filter for the bottom left upsampled pixel location (denoted "BL") of the 2x2 block of upsampled pixel locations can be determined by combining the outputs of kernels 0, 2, 4 and 5 (e.g. by setting the weights for the outputs from kernels 1 and 3 to be zero in the weighted sum, and setting the weights for the outputs from kernels 0, 2, 4 and 5 to be non-zero in the weighted sum). The weights for the outputs from kernels 0 and 5 may be equal. The weights for the outputs from kernels 2 and 4 may be equal. The weights for the outputs from kernels 2 and 4 may be larger than the weights for the outputs from kernels 0 and 5. The sum of the weights for the outputs from all six of the kernels may be 1, such that the weighted sum is normalised.

In some examples, the same filtered value for the vertical line filter is determined for both the top right upsampled pixel location ("TR") and the bottom left upsampled pixel location ("BL"). In these examples, due to the symmetry between the kernels 0 to 5, the weights for the outputs from kernels 0 and 5 may be equal, the weights for the output from kernels 1 and 4 may be equal, and the weights for the output from the kernels 2 and 3 may be equal.

The following six filter kernels (kernels 6 to 11) centred on a 2x2 block of upsampled pixel locations (shown with bold borders in the kernels below) may be applied to determine filtered values for the horizontal line filter for the top right upsampled pixel location (denoted "TR") and the bottom left upsampled pixel location (denoted "BL") of the 2x2 block of upsampled pixel locations:

| | | | | | |
|---|---|---|---|---|---|
| -0.5 | | 0 | | 0 | |
| | 0 | | 0 | | 0 |
| 1 | | 0 | TR | 0 | |
| | 0 | BL | 0 | | 0 |
| -0.5 | | 0 | | 0 | |
| | 0 | | 0 | | 0 |

### Kernel 6

| | | | | | |
|---|---|---|---|---|---|
| 0 | | 0 | | 0 | |
| | -0.5 | | 0 | | 0 |
| 0 | | 0 | TR | 0 | |
| | 1 | BL | 0 | | 0 |
| 0 | | 0 | | 0 | |
| | -0.5 | | 0 | | 0 |

### Kernel 7

| | | | | | |
|---|---|---|---|---|---|
| 0 | | -0.5 | | 0 | |
| | 0 | | 0 | | 0 |
| 0 | | 1 | TR | 0 | |
| | 0 | BL | 0 | | 0 |
| 0 | | -0.5 | | 0 | |
| | 0 | | 0 | | 0 |

### Kernel 8

| | | | | | |
|---|---|---|---|---|---|
| 0 | | 0 | | 0 | |
| | 0 | | -0.5 | | 0 |
| 0 | | 0 | TR | 0 | |
| | 0 | BL | 1 | | 0 |
| 0 | | 0 | | 0 | |
| | 0 | | -0.5 | | 0 |

### Kernel 9

| | | | | | |
|---|---|---|---|---|---|
| 0 | | 0 | | -0.5 | |
| | 0 | | 0 | | 0 |
| 0 | | 0 | TR | 1 | |
| | 0 | BL | 0 | | 0 |
| 0 | | 0 | | -0.5 | |
| | 0 | | 0 | | 0 |

### Kernel 10

| | | | | | |
|---|---|---|---|---|---|
| 0 | | 0 | | 0 | |
| | 0 | | 0 | | -0.5 |
| 0 | | 0 | TR | 0 | |
| | 0 | BL | 0 | | 1 |
| 0 | | 0 | | 0 | |
| | 0 | | 0 | | -0.5 |

### Kernel 11

The outputs from the six filter kernels shown above (kernels 6 to 11) can be used to determine the filtered value for the horizontal line filter for the top right upsampled pixel location (denoted "TR") and the bottom left upsampled pixel location (denoted "BL") of the 2x2 block of upsampled pixel locations, e.g. by finding a weighted sum of the absolute values of the outputs of the kernels. For example, the filtered value for the horizontal line filter for the top right upsampled pixel location (denoted "TR") of the 2x2 block of upsampled pixel locations can be determined by combining the outputs of kernels 6, 8, 10 and 11 (e.g. by setting the weights for the outputs from kernels 7 and 9 to be zero in the weighted sum, and setting the weights for the outputs from kernels 6, 8, 10 and 11 to be non-zero in the weighted sum). The weights for the outputs from kernels 6 and 11 may be equal. The weights for the outputs from kernels 8 and 10 may be equal. The weights for the outputs from kernels 8 and 10 may be larger than the weights for the outputs from kernels 6 and 11. The sum of the weights for the outputs from all six of the kernels (kernels 6 to 11) may be 1, such that the weighted sum is normalised.

As another example, the filtered value for the horizontal line filter for the bottom left upsampled pixel location (denoted "BL") of the 2x2 block of upsampled pixel locations can be determined by combining the outputs of kernels 6, 7, 9 and 11 (e.g. by setting the weights for the outputs from kernels 8 and 10 to be zero in the weighted sum, and setting the weights for the outputs from kernels 6, 7, 9 and 11 to be non-zero in the weighted sum). The weights for the outputs from kernels 6 and 11 may be equal. The weights for the outputs from kernels 7 and 9 may be equal. The weights for the outputs from kernels 7 and 9 may be larger than the weights for the outputs from kernels 6 and 11. The sum of the weights for the outputs from all six of the kernels (kernels 6 to 11) may be 1, such that the weighted sum is normalised.

In some examples, the same filtered value for the horizontal line filter is determined for both the top right upsampled pixel location ("TR") and the bottom left upsampled pixel location ("BL"). In these examples, due to the symmetry between the kernels 6 to 11, the weights for the outputs from kernels 6 and 11 may be equal, the weights for the output from kernels 7 and 10 may be equal, and the weights for the output from the kernels 8 and 9 may be equal.

In this example, the edge filters may be simplified. The following filter kernels ("kernel 12" and "kernel 13") centred on the 2x2 block of upsampled pixel locations (shown with bold borders) may be applied to determine filtered values for the vertical edge filter for the top right upsampled pixel location (denoted "TR") and for the bottom left upsampled pixel location (denoted "BL") of the 2x2 block of upsampled pixel locations:

| | | | | | |
|---|---|---|---|---|---|
| 0 | | 0 | | 0 | |
| | 0 | | 0 | | 0 |
| 0 | | 1 | TR | -1 | |
| | 0 | BL | 0 | | 0 |
| 0 | | 0 | | 0 | |
| | 0 | | 0 | | 0 |

### Kernel 12

| | | | | | |
|---|---|---|---|---|---|
| 0 | | 0 | | 0 | |
| | 0 | | 0 | | 0 |
| 0 | | 0 | TR | 0 | |
| | 1 | BL | -1 | | 0 |
| 0 | | 0 | | 0 | |
| | 0 | | 0 | | 0 |

### Kernel 13

In particular, the filtered value for the vertical edge filter for both the top right upsampled pixel location and the bottom left upsampled pixel location of the 2x2 block of upsampled pixel locations may be determined to be the sum of the absolute value of the output of kernel 12 and the absolute value of the output of kernel 13.

The following filter kernels ("kernel 14" and "kernel 15") centred on the 2x2 block of upsampled pixel locations (shown with bold borders) may be applied to determine filtered values for the horizontal edge filter for the top right upsampled pixel location (denoted "TR") and for the bottom left upsampled pixel location (denoted "BL") of the 2x2 block of upsampled pixel locations:

| | | | | | |
|---|---|---|---|---|---|
| 0 | | 0 | | 0 | |
| | 0 | | 1 | | 0 |
| 0 | | 0 | TR | 0 | |
| | 0 | BL | -1 | | 0 |
| 0 | | 0 | | 0 | |
| | 0 | | 0 | | 0 |

### Kernel 14

| | | | | | |
|---|---|---|---|---|---|
| 0 | | 0 | | 0 | |
| | 0 | | 0 | | 0 |
| 0 | | 1 | TR | 0 | |
| | 0 | BL | 0 | | 0 |
| 0 | | -1 | | 0 | |
| | 0 | | 0 | | 0 |

### Kernel 15

In particular, the filtered value for the horizontal edge filter for both the top right upsampled pixel location and the bottom left upsampled pixel location of the 2x2 block of upsampled pixel locations may be determined to be the sum of the absolute value of the output of kernel 14 and the absolute value of the output of kernel 15.

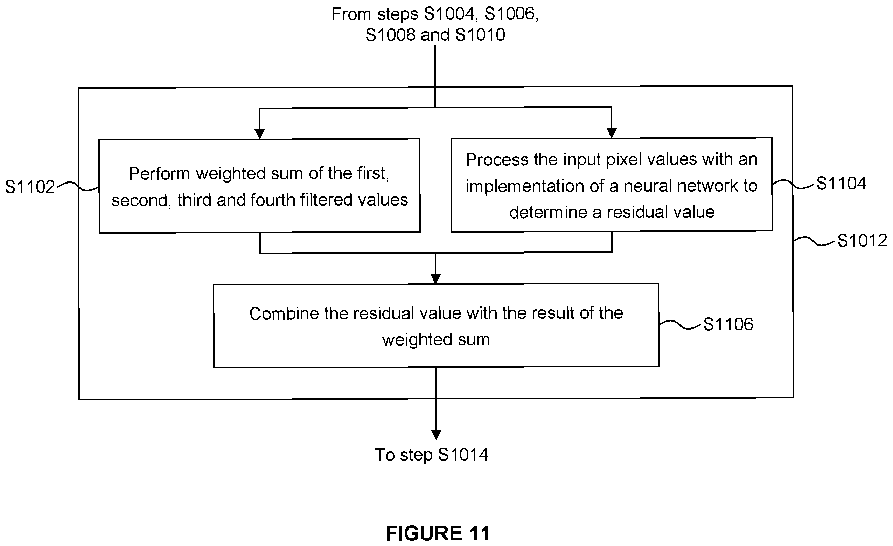

Figure 11 illustrates an example of how step S1012 can be performed. In particular, step S1012 may comprise steps S1102, S1104 and S1106, wherein steps S1102 and S1104 may be performed in any order, or in parallel.

In step S1102 the processing logic 910 performs a weighted sum of the first, second, third and fourth filtered values. In other words, the processing logic 910 combines the first, second, third and fourth filtered values by performing a weighted sum. The processing logic determines the absolute values of the first, second, third and fourth filtered values because the signs of the filtered values is not relevant for determining the indication of the weighting parameter(s). In particular, the absolute value determination logic 914 determines the absolute value of the first filtered value that was determined by the horizontal edge filtering logic 902; the absolute value determination logic 916 determines the absolute value of the second filtered value that was determined by the vertical edge filtering logic 904; the absolute value determination logic 918 determines the absolute value of the third filtered value that was determined by the horizontal line filtering logic 906; and the absolute value determination logic 920 determines the absolute value of the fourth filtered value that was determined by the vertical line filtering logic 908. The summation logic 922 subtracts the absolute value of the second filtered value from the absolute value of the first filtered value, and the multiplication logic 924 multiplies the output from the summation logic 922 by a parameter β. The summation logic 926 subtracts the absolute value of the fourth filtered value from the absolute value of the third filtered value, and the multiplication logic 928 multiplies the output from the summation logic 926 by a parameter δ. The summation logic 930 sums the output from the multiplication logic 924 with the output from the multiplication logic 928. The output from the summation logic 930 represents a weighted sum (*S*) of the of the absolute values of the four filtered values. In particular, *S = β*|*hₑ*| - *β*|*vₑ*| + *δ*|*hₗ*| - *δ*|*vₗ*|, where *hₑ* is the first filtered value (i.e. the result of applying the horizontal edge filter to two or more of the input pixel values in step S1004), *vₑ* is the second filtered value (i.e. the result of applying the vertical edge filter to two or more of the input pixel values in step S1006), *hₗ* is the third filtered value (i.e. the result of applying the horizontal line filter to three or more of the input pixel values in step S1008), and *vₗ* is the fourth filtered value (i.e. the result of applying the vertical line filter to three or more of the input pixel values in step S1010).

In examples described above, the one or more weighting parameters which are indicated by the output of the weighting parameter determination logic 408 are to be applied for determining an upsampled pixel value at the upsampled pixel location at the centre of the filter kernels. In some other examples, the indication of the one or more weighting parameters that is output by the weighting parameter determination logic 408 may be applied for determining upsampled pixel values at multiple output locations (e.g. for both top right and bottom left output locations). In these examples, the filtering logic (902, 904, 906 and 908) could be applied multiple times, centred on each of the output locations. In these examples, each block of filtering logic (902, 904, 906 and 908) provides the multiple (e.g. two) results of applying the filtering multiple times to its respective absolute value determination logic, which would find the absolute values of the multiple (e.g. two) filtered values and sum the absolute values together before outputting the result of the sum. For example, with reference to Figure 9, in these examples:
- the horizontal edge filtering logic 902 would apply a horizontal edge filter to input pixel values centred at multiple (e.g. two) output pixel locations to determine multiple (e.g. two) filtered values; and the absolute value determination logic 914 would find the absolute values of those multiple (e.g. two) filtered values, sum the absolute values and provide the result of the sum to the summation logic 922;
- the vertical edge filtering logic 904 would apply a vertical edge filter to input pixel values centred at multiple (e.g. two) output pixel locations to determine multiple (e.g. two) filtered values; and the absolute value determination logic 916 would find the absolute values of those multiple (e.g. two) filtered values, sum the absolute values and provide the result of the sum to the summation logic 922;
- the horizontal line filtering logic 906 would apply a horizontal line filter to input pixel values centred at multiple (e.g. two) output pixel locations to determine multiple (e.g. two) filtered values; and the absolute value determination logic 918 would find the absolute values of those multiple (e.g. two) filtered values, sum the absolute values and provide the result of the sum to the summation logic 926; and
- the vertical line filtering logic 908 would apply a vertical line filter to input pixel values centred at multiple (e.g. two) output pixel locations to determine multiple (e.g. two) filtered values; and the absolute value determination logic 920 would find the absolute values of those multiple (e.g. two) filtered values, sum the absolute values and provide the result of the sum to the summation logic 926.
The method would then proceed as described above in these examples.

In step S1104 the implementation of the neural network 912 processes the input pixel values to determine a residual value. In step S1106 the processing logic 910 combines the determined residual value with the first, second, third and fourth filtered values to determine the indication of one or more weighting parameters. In particular, the summation logic 932 sums the result of the weighted sum determined by summation logic 930 and the residual value determined by the implementation of the neural network 912. Then in the example shown in Figure 9, the multiplication logic 934 multiplies the output of the summation logic 932 by a parameter α, and the summation logic 936 adds 0.5 to the output of the multiplication logic 934.

The clamping logic 938 clamps the indication of the one or more weighting parameters to be in a range [0,1] before it is output. Then the indication of the one or more weighting parameters (*a*) is output in step S1014.

The values of the parameters α, β and δ may be fixed and may be predetermined before runtime, e.g. they may be hardcoded into the hardware of the processing logic 910. Alternatively, one or more of the values of the parameters α, β and δ may be variable, and may be set in software. Furthermore, one or more of the values of the parameters α, β and δ may be trained (e.g. using a back-propagation technique) so that the indication of one or more weighting parameters indicates one or more weighting parameters that are indicative of relative horizontal and vertical variation of the input pixel values within the image region.

For example, the entire system can be trained end-to-end. As part of the training process, a 'loss' can be specified in terms of the differences between the upsampled output pixel values and ground truth pixel values. Differences can be measured using (for example) the L1 or L2 norms. An image can be used for training by extracting a chequerboard pattern of pixels to act as the input to the upsampling algorithm. The full image can be used as the ground truth for the purposes of comparison to the upsampling output. Typically images would be from the target application (e.g. rendered frames) but synthetic images can also be useful to provide examples of particular features e.g. edges at a large number of orientations. The value of alpha may also be made configurable so that it can be changed from its trained value. This allows the user to adjust the width of the transition region between fully interpolating in one direction and fully interpolating in the other direction. This may be useful if intermediate interpolation directions are causing staircase artifacts.

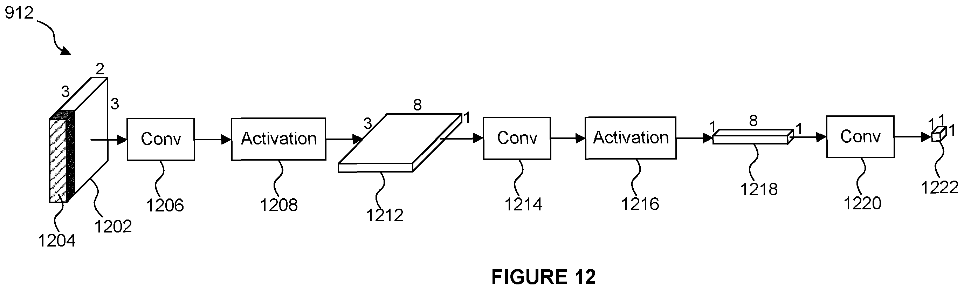

The neural network may be a convolutional neural network. Figure 12 illustrates the implementation of the neural network 912 configured to output the residual value. The implementation of the neural network 912 may be implemented on any suitable hardware, e.g. a GPU or a neural network accelerator (NNA), or as fixed-function hardware with predetermined, fixed weights. The neural network has been trained, e.g. using Quantization Aware Training (QAT), to determine the residual value such that the one or more weighting parameters are indicative of a directionality of filtering to be applied when upsampling is applied to the input pixel values. In particular, the implementation of the neural network 912 is configured to receive the input pixel values 1202, process the input pixel values to determine the residual value, and output the determined residual value for use by the processing logic 910 in determining the indication of the one or more weighting parameters for the image region represented by the input pixel values. As described above, the input pixel values may be represented in two input blocks, wherein one of the two input blocks comprises the input pixel values having locations corresponding to locations within odd rows of a repeating quincunx arrangement of upsampled pixel locations, and the other of the two input blocks comprises the input pixel values having locations corresponding to locations within even rows of the repeating quincunx arrangement of upsampled pixel locations. In the example shown in Figure 12, each of the input blocks is a 3x3 block of input pixel values, such that the input pixel values 1202 are shown as a 3x3x2 array to indicate that the input pixel values are organised as two 3x3 input blocks of input pixel values.

As mentioned above, the neural network is trained to output the residual value, rather than attempting to train the neural network to output the indication of the weighting parameter(s) or even the upsampled pixels themselves. This is because a neural network is well suited to determining suitable residual values to make slight adjustments to the weighted sum of the four filtered values, and this task can be achieved with a small neural network. As such, the complexity of the implementation of the neural network 912 is low, so it can have a small silicon area, and low latency and power consumption.

In particular, the implementation of the neural network 912 comprises a first convolution layer 1206, a first activation function 1208, a second convolution layer 1214, a second activation function 1216 and a third convolution layer 1220. It is noted that convolution layers and activation functions are simple to implement. The first activation function 1208 is implemented between the first convolution layer 1206 and the second convolution layer 1214, and the second activation function 1216 is implemented between the second convolution layer 1214 and the third convolution layer 1220. The activation functions 1208 and 1216 may, for example, be rectified linear units (ReLUs), absolute functions or identity functions. It is noted that implementing an identity function is equivalent to implementing no function. An 'absolute function' outputs the absolute value of its input. In a first example, the first and second activation functions 1208 and 1216 are both rectified linear units (ReLUs). In a second example, the first activation function 1208 is an identity function and the second activation function 1216 is an absolute function. It is noted that ReLUs introduce nonlinearities. As such, it is easier to analyse the combined effect of the first two convolution layers in the second example than in the first example because a nonlinearity is not implemented between the first and second convolution layers in the second example. The neural network may be implemented in hardware (e.g. in fixed function circuitry), software, or a combination thereof.

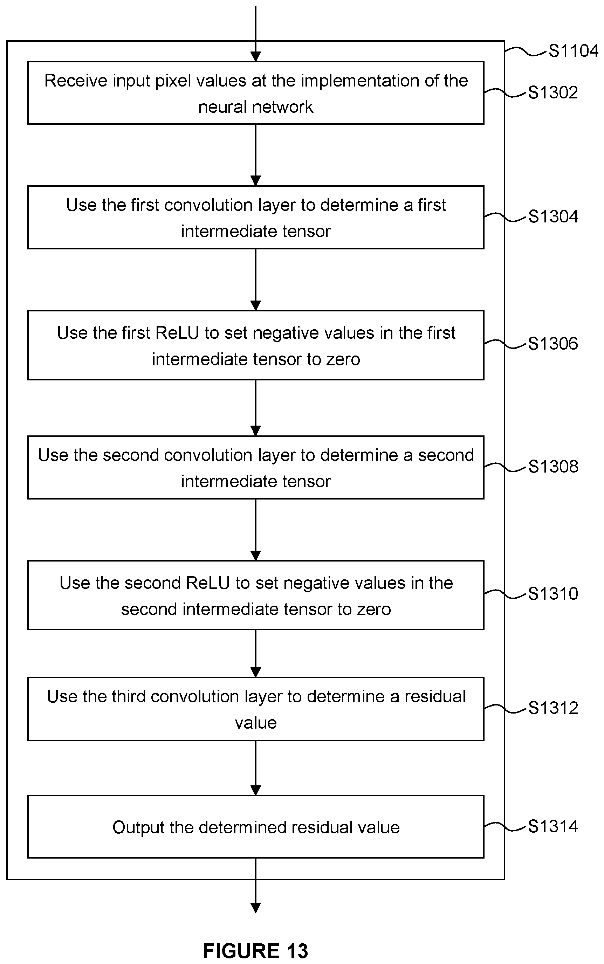

Figure 13 is a flow chart for a method of determining, in step S1104, a residual value using the implementation of the neural network 912 in the first example mentioned above in which the first and second activation functions are ReLU units. In step S1302 the input pixel values 1202 are received at the implementation of the neural network 912.

In step S1304 the first convolution layer 1206 is used to determine a first intermediate tensor based on the input pixel values 1202. In step S1306 the first ReLU 1208 is used to set negative values in the first intermediate tensor to zero. In fixed function hardware, the first ReLU 1208 could be implemented trivially by combining with the preceding convolution, e.g. by OR-ing the result of the preceding convolution with the NOT of the sign bit. The first intermediate tensor 1212 output from the first ReLU 1208 is shown in Figure 12. The first intermediate tensor 1212 extends in only one of a horizontal dimension and a vertical dimension with respect to the dimensions of the image region represented by the input pixels 1202. In the example shown in Figure 12, the first intermediate tensor 1212 extends in only a horizontal dimension (and not a vertical dimension) e.g. where the processing is performed along the rows of the image. However, in other examples, the first intermediate tensor could extend in only a vertical dimension (and not a horizontal dimension), e.g. if the processing were to be performed down the columns of the image. In the example shown in Figure 12, the first intermediate tensor 1212 is a 3x1x8 array.

In step S1308 the second convolution layer 1214 is used to determine a second intermediate tensor based on the first intermediate tensor 1212. To save computation, this layer may be a depthwise convolution, i.e. processing each channel of the input separately without a cross-channel component to the operation. In step S1310 the second ReLU 1216 is used to set negative values in the second intermediate tensor to zero. The second intermediate tensor 1218 output from the second ReLU 1216 is shown in Figure 12. The second intermediate tensor does not extend in either the horizontal dimension or the vertical dimension with respect to the dimensions of the image region represented by the input pixel values 1202. In the example shown in Figure 12, the second intermediate tensor 1218 is a 1x1x8 array.

In step S1312 the third convolution layer 1220 is used to determine the residual value 1222 based on the second intermediate tensor 1218. The residual value 1222 is shown in Figure 12 as a 1x1x1 array (i.e. a scalar value for each input region).

Splitting the processing into separate vertical, horizontal and channel passes (in the first, second and third convolution layers respectively) keeps the number of Multiply and Accumulate (MAC) units low in the implementation of the neural network 912. The first convolution 1206 in the present example performs 1x3x2x8 = 48 MACs (multiply-accumulates) per output block; the second convolution 1214 performs 3x1x8x1 = 24 MACs per output block; and the final convolution 1220 performs 8 MACs per output block. In total, therefore, this network performs 80 MACs per output block, which is significantly lower than typical upsampling neural networks, which typically require many orders of magnitude more operations for the same output resolution. Further significant savings are possible by removing unused channels from the trained network, and using low-precision integer arithmetic by means of QAT. Quantisation could be applied to the network using a number of different techniques, such as post training quantisation (PTQ) and manual format selection to give two examples. Such savings translate directly into lower area, power and latency requirements when implemented in fixed-function hardware.

In step S1314 the residual value is output from the implementation of the neural network 912, and provided to the processing logic 910 for use in step S1106 as described above.

As mentioned above, Figure 13 shows the first example in which the first and second activation functions are ReLU units. The method would proceed in a similar manner in the second example in which the first activation function is an identity function and the second activation function is an absolute function, except in step S1306 the identity function would just pass the first intermediate tensor through unchanged, and in step S1310 the absolute function would set the values in the second intermediate tensor to be absolute values (i.e. the signs of any negative values in the second intermediate tensor would be switched to be positive, with the magnitudes of the values in the second intermediate tensor being left unchanged).

In some examples, the image region is part of an input image, wherein the upsampling is to be performed iteratively for a plurality of partially overlapping image regions within the input image. In this sense, each of the image regions can be thought of as a window that slides across the input image. In these cases, some of the input pixel values 1202 of a current image region are the same as some of the input pixel values of a previous image region. The 'previous image region' may be the image region that was processed in the preceding iteration. In these examples, the processing of the input pixel values with the implementation of the neural network 912 may further comprise storing the first intermediate tensor 1212 in a buffer which functions as a queue/shift register. This storing step can be performed between steps S1306 and S1308 in the flow chart of Figure 13. The first convolution layer 1206 may operate on input pixel values (shown with hatching and denoted 1204 in Figure 12) within a first portion of the current image region that does not overlap with a previous image region, but does not need to operate on input pixel values (i.e. the rest of the input pixels 1202 which are not shown with hatching in Figure 12) within a second portion of the current image region that does overlap with the previous image region. The use of the buffer for storing the first intermediate tensor 1212 means that the first convolution layer 1206 can avoid performing an entire convolution of all of the input pixel values, and can instead reuse values that were determined in a previous iteration. On each iteration, the window may slide by one pixel position in both of the input blocks, such that the second portion of the current image region 904 is a line (e.g. a column or a row) of pixel values in both of the input blocks. This means that the overlapping region (i.e. the first portion of the current image region 1204) is a 3x2 block of input pixel values in each of the input blocks. It can be appreciated that in this case most of the input pixel values of the current image region overlap with input pixel values of the previous image region. Furthermore, since in the example shown in Figure 12, the second portion of the image region 1204 is a column of input pixel values from each of the input blocks and since the first convolution layer 1206 removes the vertical extent from the first intermediate tensor 1212 without removing horizontal extent from the first intermediate tensor 1212, the first convolution layer does not need to operate on the input pixel values in the first portion of the image region. It is noted that in other examples, the window may slide vertically rather than horizontally such that the nonoverlapping portion of the input pixel values is a row of input pixel values from each of the input blocks, and in this case the first convolution layer could remove the horizontal extent from the first intermediate tensor without removing vertical extent from the first intermediate tensor, such that the first convolution layer would again not need to operate on the input pixel values in the overlapping portion of the input pixel values.

The implementation of the neural network does not comprise any linestores. Linestores store lines (e.g. rows) of pixel values, and require large memories. By avoiding including any linestores in the implementation of the neural network 912 the silicon area and the power consumption of the implementation of the neural network can be kept low.

Furthermore, as mentioned above, the neural network can be trained using Quantization Aware Training (QAT). In this way, the neural network can be trained for sparsity and low bit depths. Any MACs for missing weights can be skipped (i.e. not synthesised). The implementation of the neural network 912 does not need to use the same bit depth for all layers or weights within a layer, and the QAT scheme can be used to optimise the layers and weights of the neural network appropriately.

It is noted that Figure 9 shows an example in which the weighting parameter determination logic 408 comprises an implementation of a neural network 912 (the operation of which is described above with reference to Figures 9 to 13). However, in other examples, the weighting parameter determination logic might not comprise an implementation of a neural network, and the processing logic might determine the indication of the weighting parameter(s) based solely on the four filtered values it receives from the four blocks of filtering logic 902, 904, 906 and 908. In these other examples, the weighting parameter determination logic could be the same as that shown in Figure 9, except it would not include the implementation of the neural network 912 or the summation logic 932.

In examples described above, the one or more upsampled pixel values in the block of upsampled pixel values 404 are non-sharpened upsampled pixel values, i.e. no sharpening is applied when the upsampling is performed. In these examples in which no sharpening is applied, as described above, step S602 involves applying a single first kernel to input pixel values horizontally adjacent to the upsampled pixel value being determined to determine the horizontal component, and step S604 involves applying a single second kernel to input pixel values vertically adjacent to the upsampled pixel value being determined to determine the vertical component. However, in other examples, described in detail below with reference to Figures 14 to 25, the upsampled pixel values in the block of upsampled pixel values are sharpened upsampled pixel values, i.e. sharpening is applied when the upsampling is performed.

Figure 14 illustrates pixel determination logic 1400 configured to determine sharpened upsampled pixel values. The pixel determination logic 1400 may be implemented on a processing module (e.g. processing module 402 shown in Figure 4). The pixel determination logic 1400 is configured to receive input pixel values 1402, process the input pixel values and output a block of sharpened upsampled pixel values 1410. As described above, the input pixel values 1402 are represented with two input blocks (denoted 1404₁ and 1404₂ in Figure 14), which correspond to the input blocks 304 and 306 described above. The pixel determination logic 1400 comprises six pairs of kernels 1406, wherein each pair of kernels 1406 comprises one kernel to be applied to the first input block 1404₁ and another kernel to be applied to the second input block 1404₂. The pixel determination logic 1400 also comprises two blocks of weighted sum logic 1408. The logic of the processing module comprising the pixel determination logic 1400 may be implemented in hardware, software, or a combination thereof. A hardware implementation normally provides for a reduced latency and power consumption compared to a software implementation. The pixel determination logic 1400 is likely to be used in the same manner a large number of times on each image being upsampled, and since latency is very important in, for example, real-time super resolution applications, it is likely that implementing the pixel determination logic 1400 in hardware (e.g. in fixed function circuitry) will be preferable to implementing the logic in software. However, a software implementation is still possible and may be preferable in some situations.

Figure 15 is a flow chart for a method of determining a block of sharpened upsampled pixel values using the pixel determination logic 1400. In step S1502 the two input blocks of input pixel values 1404₁ and 1404₂ are received at the pixel determination logic 1400. The pixel determination logic 1400 then determines each of the sharpened upsampled pixel values in the block of sharpened upsampled pixel values 1410 by performing steps S1504, S1506 and S1508.

For each sharpened upsampled pixel value in the block of sharpened upsampled pixel values 1410 the pixel determination logic 1400: (i) in step S1504, applies a first set of one or more kernels to input pixel values of the first input block 1404₁; (ii) in step S1506, applies a second set of one or more kernels to input pixel values of the second input block 1404₂; and (iii) in step S1508, combines the results of applying the first set of one or more kernels and applying the second set of one or more kernels to determine the sharpened upsampled pixel value. Each of the kernels 1406 is configured to perform upsampling and sharpening. In other words, sharpening and upsampling (e.g. interpolation) are performed in a single linear kernel. This is possible because the two operations (interpolation and sharpening) are linear operations so can be composed (or "folded") into a single linear operation, which is advantageous because it avoids the need for costly intermediate buffering of data before a separate sharpening pass. One of the kernels of the first set (that is applied to input pixel values of the first input block 1404₁) has a first subset of values of a full sharp upsampling kernel and one of the kernels of the second set (that is applied to input pixel values of the second input block 1404₂) has a second subset of values of the full sharp upsampling kernel. As described below, the full sharp upsampling kernel has values which correspond to the upsampled pixel locations and which represent a result of convolving an interpolation kernel with a sharpening kernel. The first subset of values of the full sharp upsampling kernel (that are in said one of the kernels of the first set that is applied to input pixel values of the first input block 1404₁) includes the values of the full sharp upsampling kernel at locations corresponding to the locations of the input pixel values in the first input block 1404₁; and the second subset of values of the full sharp upsampling kernel (that are in said one of the kernels of the second set that is applied to input pixel values of the second input block 1404₂) includes the values of the full sharp upsampling kernel at locations corresponding to the locations of the input pixel values in the second input block 1404₂.

In step S1510 the block of sharpened upsampled pixel values 1410 is output from the pixel determination logic 1400.

For determining the sharpened upsampled pixel value at a location corresponding to the location of an input pixel value of the first or second input blocks (e.g. for the top left upsampled pixel value (denoted "TL" in Figure 14) and for the bottom right upsampled pixel value (denoted "BR" in Figure 14) in the block of upsampled pixel values 1410): (i) the first set of one or more kernels (that is applied to input pixel values of the first input block 1404₁ in step S1504) comprises a first single kernel which is applied to the input pixel values of the first input block 1404₁; (ii) the second set of one or more kernels (that is applied to input pixel values of the second input block 1404₂ in step S1506) comprises a second single kernel which is applied to the input pixel values of the second input block 1404₂; and (iii) the combining of the results in step S1508 comprises summing the result of applying the first single kernel to the input pixel values of the first input block 1404₁ with the result of applying the second single kernel to the input pixel values of the second input block 1404₂. For these cases, i.e. for determining a sharpened upsampled pixel value at a location corresponding to the location of an input pixel value of the first or second input block, the interpolation kernel that is convolved with the sharpening kernel is a bilinear interpolation kernel configured for use with the input blocks described herein which represent the input pixel values in the repeating quincunx arrangement.

An example of a bilinear interpolation kernel for use with input pixel values which have locations corresponding to a repeating quincunx arrangement can be represented as $\left[\begin{matrix}0 & 0.25 & 0 \\ 0.25 & 1 & 0.25 \\ 0 & 0.25 & 0\end{matrix}\right]$. If this bilinear interpolation kernel 1602 is applied and centred at a location of one of the input pixel values in the repeating quincunx arrangement then it is equivalent to applying an identity kernel at that location (because the values immediately horizontally adjacent and immediately vertically adjacent to that location in the repeating quincunx arrangement are zero), with the effect of "passing through" that value to the output. If the bilinear interpolation kernel 1602 is applied and centred at a location that falls between locations of the input pixel values in the repeating quincunx arrangement then it is equivalent to applying an average of the four adjacent input pixel values (because the kernel is centred on a zero value in the repeating quincunx arrangement).

As mentioned above, the full sharp upsampling kernel has values which represent a result of convolving an interpolation kernel (e.g. the bilinear interpolation kernel 1602) with a sharpening kernel. The sharpening kernel may be different in different examples. For example, the sharpening kernel may be an unsharp mask kernel or a Lanczos kernel, which are both known sharpening kernels.

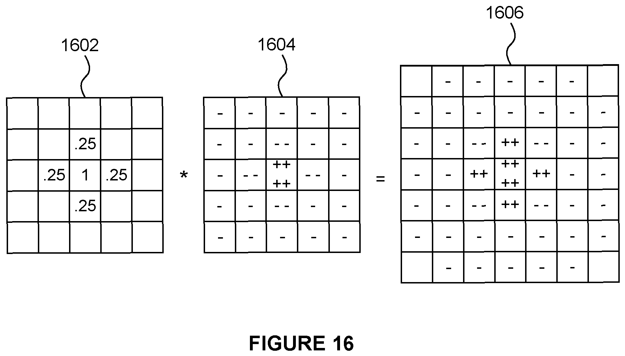

Figure 16 illustrates a first full sharp upsampling kernel 1606 as a result of convolving a bilinear interpolation kernel 1602 with a sharpening kernel 1604. Convolving this full sharp upsampling kernel with the input quincunx image, substituting zero for missing input pixel values, would result in a sharpened, bilinear interpolated image. In this example, the sharpening kernel 1604 is an unsharp mask kernel. In Figure 16, the bilinear interpolation kernel 1602 and the sharpening kernel 1604 are 5x5 kernels. The sharpening kernel 1604 has a large positive value (e.g. a value above 1, denoted "++++" in Figure 16) at the central position and has small negative values close to the central position which decrease in magnitude further from the central position (denoted "- -" and "-" in Figure 16). Figure 16 does not show the exact values in the sharpening kernel 1604 or the full sharp upsampling kernel 1606, but it is to be understood that positive values are shown with "+" symbols and negative values are shown with "-" symbols, wherein a value denoted "++++" has a larger magnitude than a value denoted "++", and wherein a value denoted "- -" has a larger magnitude than a value denoted "-". It will be understood that this notation is indicative of the general shape of linear spatially invariant sharpening kernels, and that variations on this are possible, for example a more "spread out" central maximum.

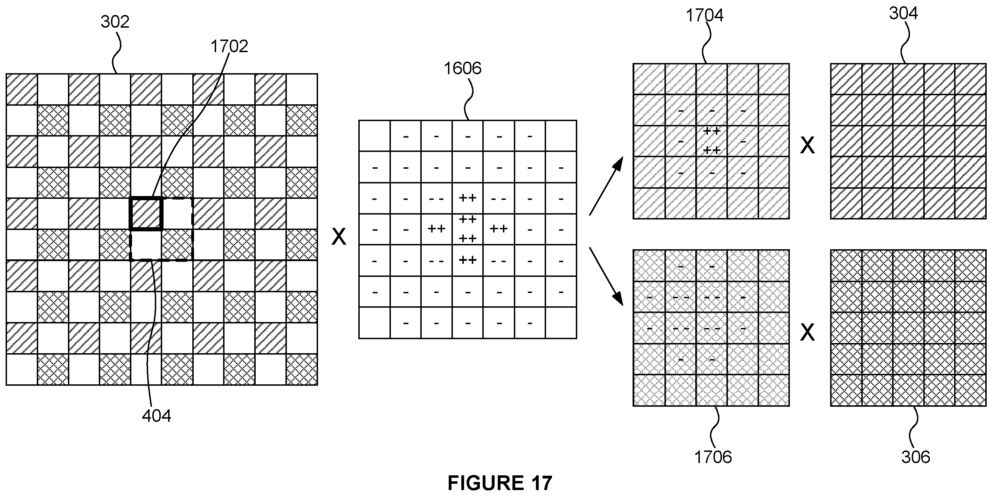

Figure 17 illustrates how the full sharp upsampling kernel 1606 can be deconstructed into: (i) a kernel 1704 to be applied to the first input block of input pixel values 304, and (ii) a kernel 1706 to be applied to the second input block of input pixel values 306, for determining the sharpened upsampled pixel value in the top left of the block of sharpened upsampled pixel values 404. The sharpened upsampled pixel value in the top left of the block of sharpened upsampled pixel values 404 has a location which corresponds to the location of one of the input pixel values 1702, in particular one of the input pixel values of the first input block 304. Conceptually, the full sharp upsampling kernel 1706 is to be applied to the input pixel values. As described above, the input pixel values have locations corresponding to a repeating quincunx arrangement (i.e. a chequer board pattern) of upsampled pixel locations, e.g. as denoted 302 in Figures 3 and 17. If the full sharp upsampling kernel 1606 were applied to the input pixel values 302 having the repeating quincunx arrangement then the values of the full sharp upsampling kernel 1606 that correspond with zero values in the repeating quincunx arrangement of input pixel values will not contribute to the result, and can therefore be ignored. As described above with reference to Figure 3, the input pixel values may be received in two input blocks 304 and 306, where the first input block 304 comprises the input pixel values of pixels having locations corresponding to locations within odd rows of the repeating quincunx arrangement of upsampled pixel locations (illustrated with line hatching), and the second input block 306 comprises the input pixel values of input pixels having locations corresponding to locations within even rows of the repeating quincunx arrangement of upsampled pixel locations (illustrated with cross-hatching).

If the kernel 1606 were applied to the input pixels 302 for determining the sharpened upsampled pixel value in the top left of the block of sharpened upsampled pixel values 404 then the kernel 1606 would be centred on the input pixel value 1702 and then values of the kernel 1606 would be multiplied with input pixel values at corresponding surrounding locations and the results would be summed. It can be seen that doing this would mean that values of the kernel 1606 would be multiplied with some, but not all, of the input pixel values of the first input block 304 shown with line hatching in Figure 17. The kernel 1704 includes those values of kernel 1606 that would be multiplied with input pixel values of the first input block 304. Furthermore, values of the kernel 1606 would be multiplied with some, but not all, of the input pixel values of the second input block 306 shown with cross hatching in Figure 17, and the kernel 1706 includes those values of kernel 1606 that would be multiplied with input pixel values of the second input block 306. Therefore, applying kernel 1606 to the input pixel values 302 for determining the sharpened upsampled pixel value in the top left of the block of sharpened upsampled pixel values 404 will give the same result as summing the results of applying kernel 1704 to the input block 304 and applying kernel 1706 to the input block 306.

Therefore, for determining the sharpened upsampled pixel value in the top left of the block of sharpened upsampled pixel values 404, step S1504 comprises applying the kernel 1704 to the first input block 304, step S1506 comprises applying the kernel 1706 to the second input block 306, and step S1508 comprises summing the results of steps S1504 and S1506. The kernels 1704 and 1706 correspond to the pair of kernels 1406_{TL} in Figure 14.

Figure 17 shows the kernels 1704 and 1706 being padded with zeros up to 5x5 kernels. In a practical application, the zero padding may not be implemented in hardware (since a multiply by a fixed zero is always zero). The zero padding shown in Figure 17 is for the clarity of this explanation, as a way of indicating the correct alignment of the kernels with respect to the 5x5 input blocks to which they will be applied. In other words, the kernel 1704 may be implemented as a 3x3 kernel (with the zero padding around the top, bottom, left and right edges of the 5x5 kernel 1704 shown in Figure 17 removed) which can then be applied to the central 3x3 region of the 5x5 input block 304. Similarly, the kernel 1706 may be implemented as a 4x4 kernel (with the zero padding around the bottom and right edges of the 5x5 kernel 1706 shown in Figure 17 removed) which can then be applied to the top left 4x4 region of the 5x5 input block 306.

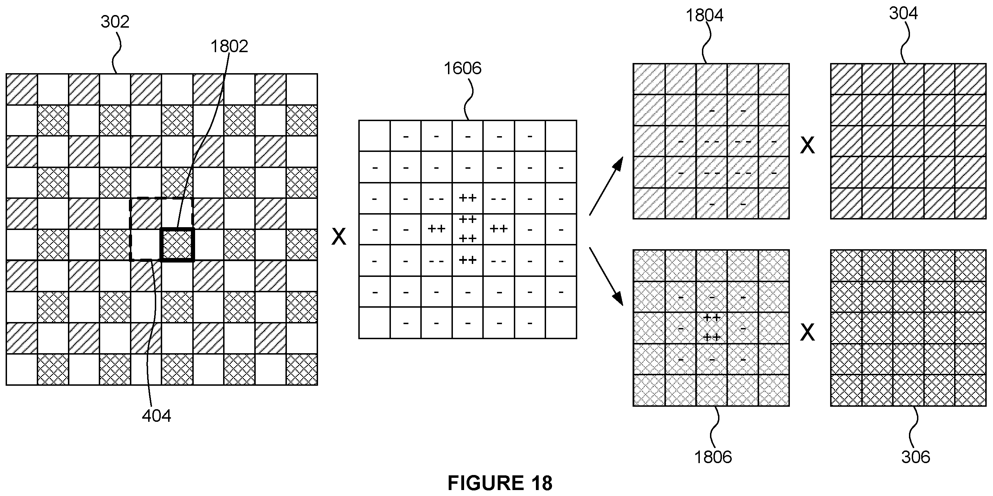

Figure 18 illustrates how the full sharp upsampling kernel 1606 can be deconstructed into: (i) a kernel 1804 to be applied to the first input block of input pixel values 304, and (ii) a kernel 1806 to be applied to the second input block of input pixel values 306, for determining the sharpened upsampled pixel value in the bottom right of the block of sharpened upsampled pixel values 404. The sharpened upsampled pixel value in the bottom right of the block of sharpened upsampled pixel values 404 has a location which corresponds to the location of one of the input pixel values 1802, in particular one of the input pixel values of the second input block 306.

If the kernel 1606 were applied to the input pixels 302 for determining the sharpened upsampled pixel value in the bottom right of the block of sharpened upsampled pixel values 404 then the kernel 1606 would be centred on the input pixel 1802 and values of the kernel 1606 would be multiplied with input pixel values at corresponding surrounding locations and the results would be summed. It can be seen that doing this would mean that values of the kernel 1606 would be multiplied with some, but not all, of the input pixel values of the first input block 304 shown with line hatching in Figure 18. The kernel 1804 includes those values of kernel 1606 that would be multiplied with input pixel values of the first input block 304. Furthermore, values of the kernel 1606 would be multiplied with some, but not all, of the input pixel values of the second input block 306 shown with cross hatching in Figure 18, and the kernel 1806 includes those values of kernel 1606 that would be multiplied with input pixel values of the second input block 306. Therefore, applying kernel 1606 to the input pixel values 302 for determining the sharpened upsampled pixel value in the bottom right of the block of sharpened upsampled pixel values 404 will give the same result as summing the results of applying kernel 1804 to the input block 304 and applying kernel 1806 to the input block 306.

Therefore, for determining the sharpened upsampled pixel value in the bottom right of the block of sharpened upsampled pixel values 404, step S1504 comprises applying the kernel 1804 to the first input block 304, step S1506 comprises applying the kernel 1806 to the second input block 306, and step S1508 comprises summing the results of steps S1504 and S1506. The kernels 1804 and 1806 correspond to the pair of kernels 1406_{BR} in Figure 14.

Figure 18 shows the kernels 1804 and 1806 being padded with zeros up to 5x5 kernels. As described above, in a practical application, the zero padding may not be implemented in hardware (since a multiply by a fixed zero is always zero). The zero padding shown in Figure 18 is for the clarity of this explanation, as a way of indicating the correct alignment of the kernels with respect to the 5x5 input blocks to which they will be applied. In other words, the kernel 1804 may be implemented as a 4x4 kernel (with the zero padding around the top and left edges of the 5x5 kernel 1904 shown in Figure 18 removed) which can then be applied to the bottom right 4x4 region of the 5x5 input block 304. Similarly, the kernel 1806 may be implemented as a 3x3 kernel (with the zero padding around the top, bottom, left and right edges of the 5x5 kernel 1806 shown in Figure 18 removed) which can then be applied to the central 3x3 region of the 5x5 input block 306.

Figures 17 and 18 show how sharpened upsampled pixel values can be determined at locations that correspond to locations of the input pixel values (e.g. at the top left and bottom right of the block of sharpened upsampled pixel values 404). We now describe how a sharpened upsampled pixel value can be determined at a location which falls between corresponding locations of input pixel values of the first and second input blocks (e.g. at the top right or bottom left of the block of sharpened upsampled pixel values 404). To determine a value of a sharpened upsampled pixel at these locations horizontal and vertical kernels are applied to each of the input blocks and the results can be combined (e.g. summed) in accordance with the weighting parameters (e.g. *a* and b). For these output pixel locations, the previously used isotropic bilinear interpolation kernel is not suitable, so directional interpolation kernels are instead used, as described below.

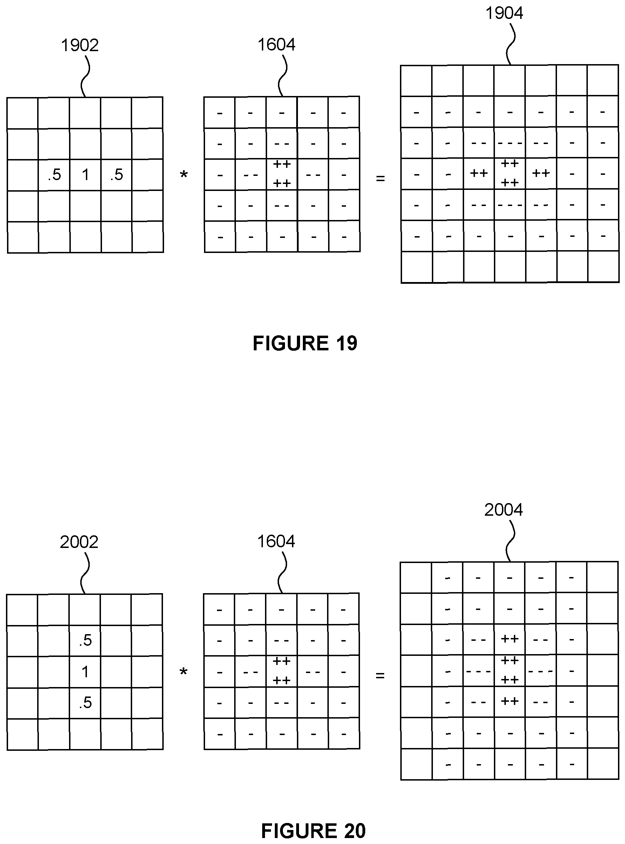

A horizontal sharp upsampling kernel can be determined as a result of convolving a linear horizontal interpolation kernel with a sharpening kernel. For example, a linear horizontal interpolation kernel may be represented as [0.5 1 0.5]. Figure 19 illustrates a full horizontal sharp upsampling kernel 1904 as a result of convolving a linear horizontal interpolation kernel 1902 with a sharpening kernel 1604. In this example, the sharpening kernel 1604 is an unsharp mask kernel. In Figure 19, the linear horizontal interpolation kernel 1902 and the sharpening kernel 1604 are 5x5 kernels. In particular, the linear horizontal interpolation kernel described above as a 1x3 kernel is padded up to the 5x5 kernel 1902 shown in Figure 19 by positioning the values of the 1x3 linear horizontal interpolation kernel in the centre of the 5x5 kernel and adding values of zero to pad it up to the 5x5 kernel 1902. As described above, the sharpening kernel 1604 has a large positive value (e.g. a value above 1, denoted "++++" in Figure 16) at the central position and has small negative values close to the central position which decrease in magnitude further from the central position (denoted "- -" and "-" in Figure 16).

Similarly, a vertical sharp upsampling kernel can be determined as a result of convolving a linear vertical interpolation kernel with a sharpening kernel. For example, a linear vertical interpolation kernel may be represented as $\left[\begin{matrix}0.5 \\ 1 \\ 0.5\end{matrix}\right]$. Figure 20 illustrates a full vertical sharp upsampling kernel 2004 as a result of convolving a linear vertical interpolation kernel 2002 with the sharpening kernel 1604. In this example, the sharpening kernel 1604 is an unsharp mask kernel. In Figure 20, the linear vertical interpolation kernel 2002 and the sharpening kernel 1604 are 5x5 kernels. In particular, the linear vertical interpolation kernel described above as a 3x1 kernel is padded up to the 5x5 kernel 2002 shown in Figure 20 by positioning the values of the 3x1 linear vertical interpolation kernel in the centre of the 5x5 kernel and adding values of zero to pad it up to the 5x5 kernel 2002. It is noted that the full vertical sharp upsampling kernel 2004 is the same as the full horizontal sharp upsampling kernel 1904, but rotated through 90°.

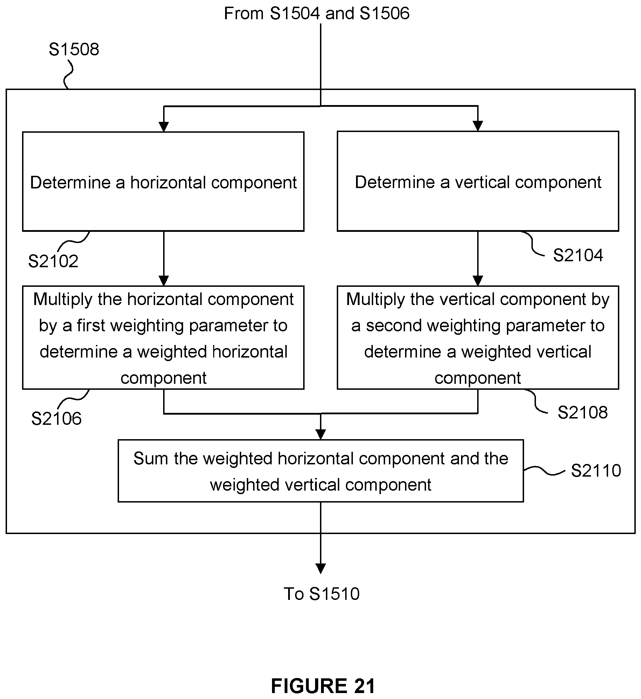

For determining a sharpened upsampled pixel value at a location which falls between corresponding locations of input pixel values of the first and second input blocks (e.g. at the top right or bottom left of the block of sharpened upsampled pixel values 404), step S1504 comprises applying a first horizontal kernel and a first vertical kernel to input pixel values of the first input block 304 (i.e. the first set of one or more kernels that are applied in step S1504 comprises a first horizontal kernel and a first vertical kernel), and step S1506 comprises applying a second horizontal kernel and a second vertical kernel to input pixel values of the second input block 306 (i.e. the second set of one or more kernels that are applied in step S1506 comprises a second horizontal kernel and a second vertical kernel). Furthermore, for determining a sharpened upsampled pixel value at a location which falls between corresponding locations of input pixel values of the first and second input blocks (e.g. at the top right or bottom left of the block of sharpened upsampled pixel values 404), step S1508 (of combining the results of steps S1504 and S1506) comprises the steps shown in Figure 21.

Figure 21 is a flow chart for a method of combining the results of applying kernels to the input blocks to determine a sharpened upsampled pixel value at a location which falls between corresponding locations of the input pixel values. In particular, in step S2102 the pixel determination logic 1400 determines a horizontal component by summing the result of applying the first horizontal kernel to the input pixel values of the first input block 304 (in step S1504) with the result of applying the second horizontal kernel to the input pixel values of the second input block 306 (in step S1506). In step S2104 the pixel determination logic 1400 determines a vertical component by summing the result of applying the first vertical kernel to the input pixel values of the first input block 304 (in step S1504) with the result of applying the second vertical kernel to the input pixel values of the second input block 306 (in step S1506). Steps S2102 and S2104 may be performed in series or in parallel. The pixel determination logic 1400 can then combine the determined horizontal and vertical components (e.g. by performing steps S2106, S2108 and S2110) to determine the sharpened upsampled pixel value.

For example, in step S2106 the pixel determination logic 1400 multiplies the horizontal component (determined in step S2102) by a first weighting parameter (e.g. the weighting parameter *a* described above) to determine a weighted horizontal component. In step S2108 the pixel determination logic 1400 multiplies the vertical component (determined in step S2104) by a second weighting parameter (e.g. the weighting parameter b described above) to determine a weighted vertical component. Steps S2106 and S2108 may be performed in series or in parallel. In step S2110 the pixel determination logic sums the weighted horizontal component and the weighted vertical component to determine the sharpened upsampled pixel value.

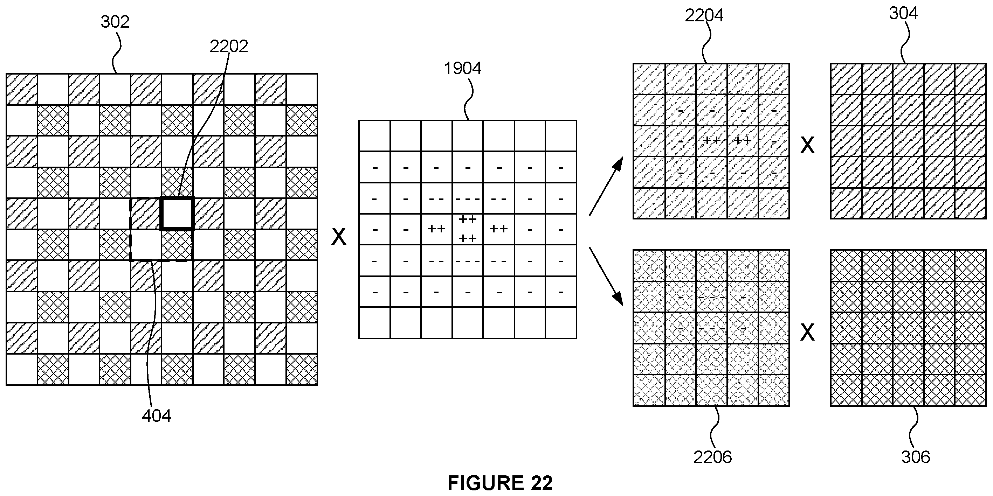

Figure 22 illustrates how the full horizontal sharp upsampling kernel 1904 can be deconstructed into: (i) a kernel 2204 to be applied to the first input block of input pixel values 304, and (ii) a kernel 2206 to be applied to the second input block of input pixel values 306, for use in determining the horizontal component for the sharpened upsampled pixel in the top right of the block of sharpened upsampled pixel values 404. The sharpened upsampled pixel value in the top right of the block of sharpened upsampled pixel values 404 has a location which corresponds to a location 2202 which is horizontally adjacent to two input pixel values of the first input block 304 and vertically adjacent to two input pixel values of the second input block 306.

If the kernel 1904 were applied to the input pixel values 302 for determining the horizontal component for the sharpened upsampled pixel value in the top right of the block of sharpened upsampled pixel values 404 (in step S2102) then the kernel 1904 would be centred on the location 2202 and values of the kernel 1904 would be multiplied with input pixel values at corresponding locations and the results would be summed. The kernel 2204 includes those values of kernel 1904 that would be multiplied with input pixel values of the first input block 304. Furthermore, the kernel 2206 includes those values of kernel 1904 that would be multiplied with input pixel values of the second input block 306. Applying kernel 1904 to the input pixel values 302 for determining the horizontal component for the sharpened upsampled pixel value in the top right of the block of sharpened upsampled pixel values 404 will give the same result as summing the results of applying kernel 2204 to the input block 304 and applying kernel 2206 to the input block 306.

Figure 22 shows the kernels 2204 and 2206 being padded with zeros up to 5x5 kernels. As described above, in a practical application, the zero padding may not be implemented in hardware (since a multiply by a fixed zero is always zero). In other words, the kernel 2204 may be implemented as a 3x4 kernel (with the zero padding around the top, bottom and left edges of the 5x5 kernel 2204 shown in Figure 22 removed) which can then be applied to the corresponding 3x4 region of the 5x5 input block 304, which is on the right of the second, third and fourth rows of input pixel values within the input block 304. Similarly, the kernel 2206 may be implemented as a 2x3 kernel (with the zero padding around the top, left and right edges and along the bottom two rows of the 5x5 kernel 2206 shown in Figure 22 removed) which can then be applied to the corresponding 2x3 region of the 5x5 input block 306, which is in the second, third and fourth columns of the second and third rows of input pixel values within the input block 306. The kernels 2204 and 2206 correspond to the pair of kernels 1406_{HTR} in Figure 14.

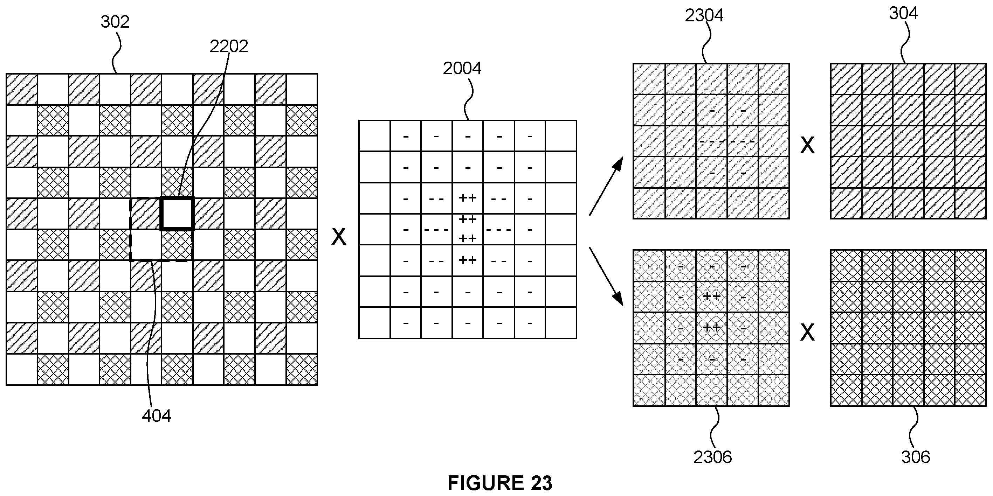

Figure 23 illustrates how the full vertical sharp upsampling kernel 2004 can be deconstructed into: (i) a kernel 2304 to be applied to the first input block of input pixel values 304, and (ii) a kernel 2306 to be applied to the second input block of input pixel values 306, for use in determining the vertical component for the sharpened upsampled pixel value in the top right of the block of sharpened upsampled pixel values 404. The sharpened upsampled pixel value in the top right of the block of sharpened upsampled pixel values 404 has a location which corresponds to the location 2202.

If the kernel 2004 were applied to the input pixel values 302 for determining the vertical component for the sharpened upsampled pixel value in the top right of the block of sharpened upsampled pixel values 404 then the kernel 2004 would be centred on the location 2202 and values of the kernel 2004 would be multiplied with input pixel values at corresponding surrounding locations and the results would be summed. The kernel 2304 includes those values of kernel 2004 that would be multiplied with input pixel values of the first input block 304. Furthermore, the kernel 2306 includes those values of kernel 2004 that would be multiplied with input pixel values of the second input block 306. In other words, the first vertical kernel 2304 has a first subset of values of the full vertical sharp upsampling kernel 2004 (i.e. the values of the full vertical sharp upsampling kernel 2004 at locations corresponding to the locations of the input pixel values in the first input block 304), and the second vertical kernel 2306 has a second subset of values of the full vertical sharp upsampling kernel 2004 (i.e. the values of the full vertical sharp upsampling kernel 2004 at locations corresponding to the locations of the input pixel values in the second input block 306). Applying kernel 2004 to the input pixels 302 for determining the vertical component for the sharpened upsampled pixel value in the top right of the block of sharpened upsampled pixel values 404 will give the same result as summing the results of applying kernel 2304 to the input block 304 and applying kernel 2306 to the input block 306.

Figure 23 shows the kernels 2304 and 2306 being padded with zeros up to 5x5 kernels. As described above, in a practical application, the zero padding may not be implemented in hardware. The kernel 2304 may be implemented as a 3x2 kernel (with the zero padding around the top, bottom and right edges and down the leftmost two columns of the 5x5 kernel 2306 shown in Figure 23 removed) which can then be applied to the corresponding 3x2 region of the 5x5 input block 304, which is in the third and fourth columns of the second, third and fourth rows of input pixel values within the input block 304. Similarly, the kernel 2306 may be implemented as a 4x3 kernel (with the zero padding around the bottom, left and right edges of the 5x5 kernel 2304 shown in Figure 23 removed) which can then be applied to the corresponding 4x3 region of the 5x5 input block 306, which is at the top of the second, third and fourth columns of input pixel values within the input block 306. The kernels 2304 and 2306 correspond to the pair of kernels 1406_{VTR} in Figure 14.

As described above, steps S2106, S2108 and S2110 are performed for determining the sharpened upsampled pixel value in the top right of the block of sharpened upsampled pixel values 404, wherein: (i) step S2106 comprises multiplying the horizontal component (determined as described above with reference to Figure 22) by the first weighting parameter, *a*, to determine a weighted horizontal component; (ii) step S2108 comprises multiplying the vertical component (determined as described above with reference to Figure 23) by the second weighting parameter, *b*, to determine a weighted vertical component; and (iii) step S2110 comprises summing the weighted horizontal component and the weighted vertical component determined in steps S2106 and S2108 to determine the sharpened upsampled pixel value in the top right of the block of sharpened upsampled pixel values 404.

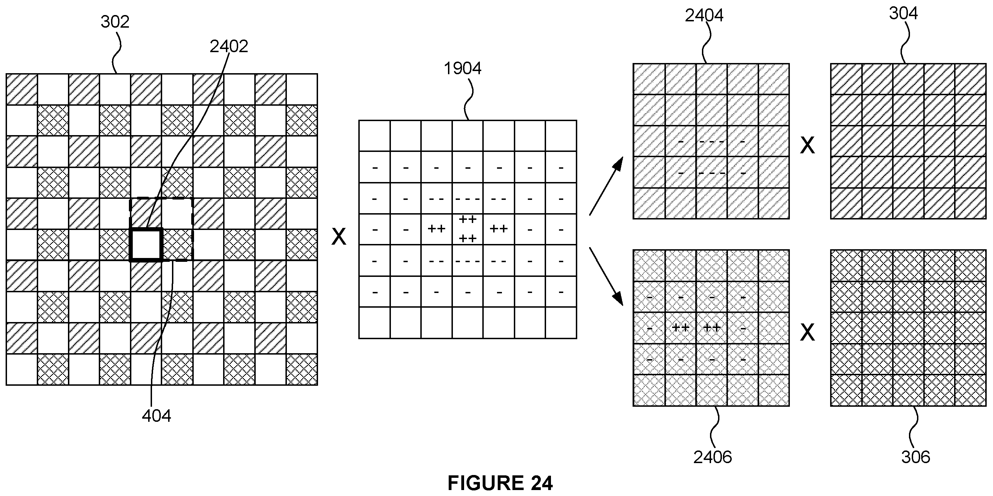

Figure 24 illustrates how the full horizontal sharp upsampling kernel 1904 can be deconstructed into: (i) a kernel 2404 to be applied to the first input block of input pixel values 304, and (ii) a kernel 2406 to be applied to the second input block of input pixel values 306, for use in determining the horizontal component for the sharpened upsampled pixel value in the bottom left of the block of sharpened upsampled pixel values 404. The sharpened upsampled pixel value in the bottom left of the block of sharpened upsampled pixels 404 has a location which corresponds to a location 2402 which is vertically adjacent to two input pixel values of the first input block 304 and horizontally adjacent to two input pixel values of the second input block 306.

If the kernel 1904 were applied to the input pixel values 302 for determining the horizontal component for the sharpened upsampled pixel value in the bottom left of the block of sharpened upsampled pixel values 404 then the kernel 1904 would be centred on the location 2402 and values of the kernel 1904 would be multiplied with input pixel values at corresponding surrounding locations and the results would be summed. The kernel 2404 includes those values of kernel 1904 that would be multiplied with input pixel values of the first input block 304. Furthermore, the kernel 2406 includes those values of kernel 1904 that would be multiplied with input pixel values of the second input block 306. In other words, the first horizontal kernel 2404 has a first subset of values of the full horizontal sharp upsampling kernel 1904 (i.e. the values of the full horizontal sharp upsampling kernel 1904 at locations corresponding to the locations of the input pixel values in the first input block 304), and the second horizontal kernel 2406 has a second subset of values of the full horizontal sharp upsampling kernel 1904 (i.e. the values of the full horizontal sharp upsampling kernel 1904 at locations corresponding to the locations of the input pixel values in the second input block 306). Applying kernel 1904 to the input pixel values 302 for determining the horizontal component for the sharpened upsampled pixel value in the bottom left of the block of sharpened upsampled pixel values 404 will give the same result as summing the results of applying kernel 2404 to the input block 304 and applying kernel 2406 to the input block 306.

Figure 24 shows the kernels 2404 and 2406 being padded with zeros up to 5x5 kernels. As described above, in a practical application, the zero padding may not be implemented in hardware. The kernel 2404 may be implemented as a 2x3 kernel (with the zero padding around the bottom, left and right edges and along the top two rows of the 5x5 kernel 2404 shown in Figure 24 removed) which can then be applied to the corresponding 2x3 region of the 5x5 input block 304, which is in the second, third and fourth columns of the third and fourth rows of input pixel values within the input block 304. Similarly, the kernel 2406 may be implemented as a 3x4 kernel (with the zero padding around the top, bottom and right edges of the 5x5 kernel 2406 shown in Figure 24 removed) which can then be applied to the corresponding 3x4 region of the 5x5 input block 306, which is on the left of the second, third and fourth rows of input pixel values within the input block 306. The kernels 2404 and 2406 correspond to the pair of kernels 1406_{HBL} in Figure 14.

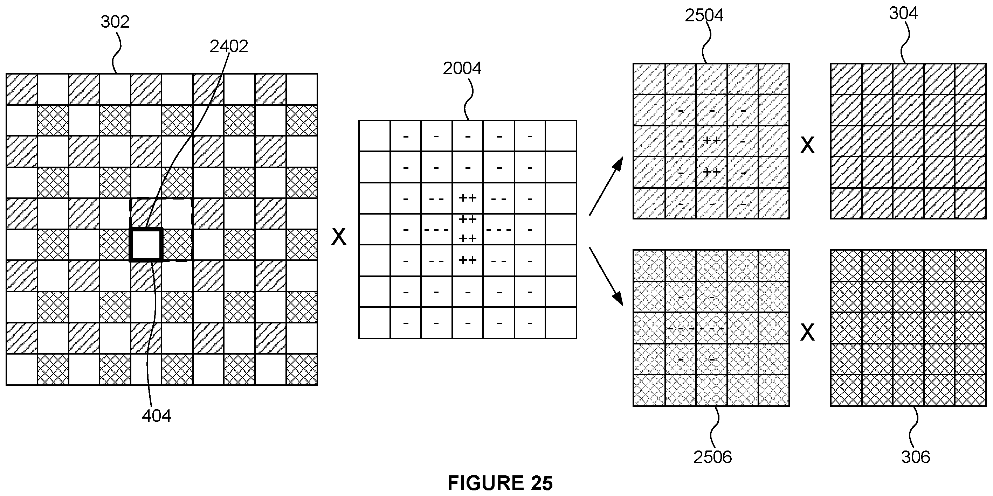

Figure 25 illustrates how the full vertical sharp upsampling kernel 2004 can be deconstructed into: (i) a kernel 2504 to be applied to the first input block of input pixel values 304, and (ii) a kernel 2506 to be applied to the second input block of input pixel values 306, for use in determining the vertical component for the sharpened upsampled pixel value in the bottom left of the block of sharpened upsampled pixel values 404. The sharpened upsampled pixel value in the bottom left of the block of sharpened upsampled pixel values 404 has a location which corresponds to the location 2402.

If the kernel 2004 were applied to the input pixels 302 for determining the vertical component for the sharpened upsampled pixel value in the bottom left of the block of sharpened upsampled pixel values 404 then the kernel 2004 would be centred on the location 2402 and values of the kernel 2004 would be multiplied with input pixel values at corresponding surrounding locations and the results would be summed. The kernel 2504 includes those values of kernel 2004 that would be multiplied with input pixel values of the first input block 304. Furthermore, the kernel 2506 includes those values of kernel 2004 that would be multiplied with input pixel values of the second input block 306. In other words, the first vertical kernel 2504 has a first subset of values of the full vertical sharp upsampling kernel 2004 (i.e. the values of the full vertical sharp upsampling kernel 2004 at locations corresponding to the locations of the input pixel values in the first input block 304), and the second vertical kernel 2506 has a second subset of values of the full vertical sharp upsampling kernel 2004 (i.e. the values of the full vertical sharp upsampling kernel 2004 at locations corresponding to the locations of the input pixel values in the second input block 306). Applying kernel 2004 to the input pixel values 302 for determining the vertical component for the sharpened upsampled pixel value in the bottom left of the block of sharpened upsampled pixel values 404 will give the same result as summing the results of applying kernel 2504 to the input block 304 and applying kernel 2506 to the input block 306.

Figure 25 shows the kernels 2504 and 2506 being padded with zeros up to 5x5 kernels. As described above, in a practical application, the zero padding may not be implemented in hardware. The kernel 2504 may be implemented as a 4x3 kernel (with the zero padding around the top, left and right edges of the 5x5 kernel 2504 shown in Figure 25 removed) which can then be applied to the corresponding 4x3 region of the 5x5 input block 304, which is at the bottom of the second, third and fourth columns of input pixel values within the input block 304. Similarly, the kernel 2506 may be implemented as a 3x2 kernel (with the zero padding around the top, bottom and left edges and down the rightmost two columns of the 5x5 kernel 2506 shown in Figure 25 removed) which can then be applied to the corresponding 3x2 region of the 5x5 input block 306, which is in the second and third columns of the second, third and fourth rows of input pixel values within the input block 306. The kernels 2504 and 2506 correspond to the pair of kernels 1406_{VBL} in Figure 14.

As described above, steps S2106, S2108 and S2110 are performed for determining the sharpened upsampled pixel value in the bottom left of the block of sharpened upsampled pixel values 404, wherein: (i) step S2106 comprises multiplying the horizontal component (determined as described above with reference to Figure 24) by the first weighting parameter, *a*, to determine a weighted horizontal component; (ii) step S2108 comprises multiplying the vertical component (determined as described above with reference to Figure 25) by the second weighting parameter, *b*, to determine a weighted vertical component; and (iii) step S2110 comprises summing the weighted horizontal component and the weighted vertical component determined in steps S2106 and S2108 to determine the sharpened upsampled pixel value in the bottom left of the block of sharpened upsampled pixel values 404.

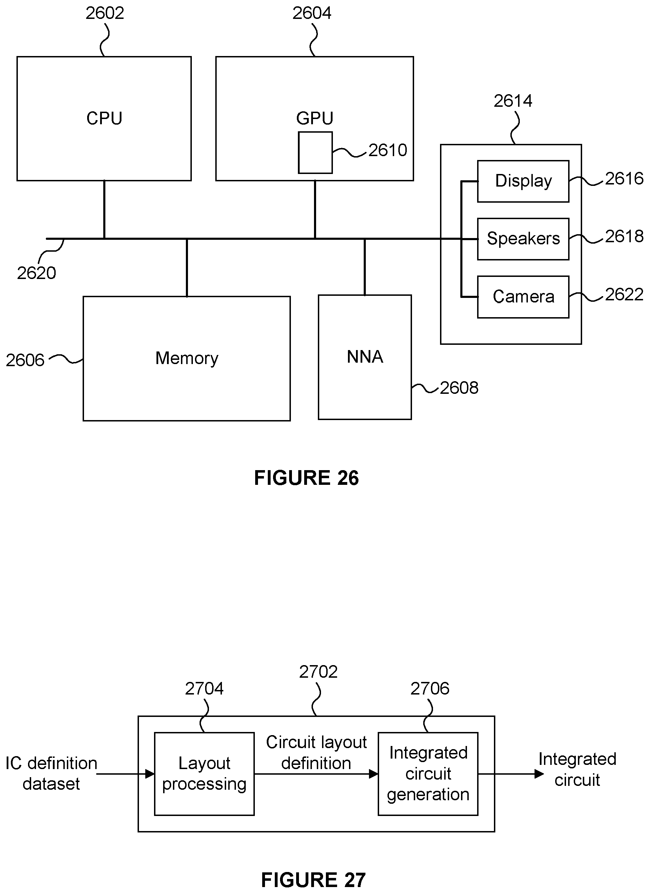

Figure 26 shows a computer system in which the processing modules described herein may be implemented. The computer system comprises a CPU 2602, a GPU 2604, a memory 2606, a neural network accelerator (NNA) 2608 and other devices 2614, such as a display 2616, speakers 2618 and a camera 2622. A processing block 2610 (corresponding to the processing modules described herein) is implemented on the GPU 2604. In other examples, one or more of the depicted components may be omitted from the system, and/or the processing block 2610 may be implemented on the CPU 2602 or within the NNA 2608 or in a separate block in the computer system. The components of the computer system can communicate with each other via a communications bus 2620.

The processing modules described herein are shown as comprising a number of functional blocks. This is schematic only and is not intended to define a strict division between different logic elements of such entities. Each functional block may be provided in any suitable manner. It is to be understood that intermediate values described herein as being formed by a processing module need not be physically generated by the processing module at any point and may merely represent logical values which conveniently describe the processing performed by the processing module between its input and output.

The processing modules described herein may be embodied in hardware on an integrated circuit. The processing modules described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java (RTM) or OpenCL (RTM). Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing module configured to perform any of the methods described herein, or to manufacture a processing module comprising any apparatus described herein. An integrated circuit definition dataset may be, for example, an integrated circuit description.

Therefore, there may be provided a method of manufacturing, at an integrated circuit manufacturing system, a processing module as described herein. Furthermore, there may be provided an integrated circuit definition dataset that, when processed in an integrated circuit manufacturing system, causes the method of manufacturing a processing module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing module will now be described with respect to Figure 27.

Figure 27 shows an example of an integrated circuit (IC) manufacturing system 2702 which is configured to manufacture a processing module as described in any of the examples herein. In particular, the IC manufacturing system 2702 comprises a layout processing system 2704 and an integrated circuit generation system 2706. The IC manufacturing system 2702 is configured to receive an IC definition dataset (e.g. defining a processing module as described in any of the examples herein), process the IC definition dataset, and generate an IC according to the IC definition dataset (e.g. which embodies a processing module as described in any of the examples herein). The processing of the IC definition dataset configures the IC manufacturing system 2702 to manufacture an integrated circuit embodying a processing module as described in any of the examples herein.

The layout processing system 2704 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2704 has determined the circuit layout it may output a circuit layout definition to the IC generation system 2706. A circuit layout definition may be, for example, a circuit layout description.

The IC generation system 2706 generates an IC according to the circuit layout definition, as is known in the art. For example, the IC generation system 2706 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2706 may be in the form of computer-readable code which the IC generation system 2706 can use to form a suitable mask for use in generating an IC.

The different processes performed by the IC manufacturing system 2702 may be implemented all in one location, e.g. by one party. Alternatively, the IC manufacturing system 2702 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 27 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 27, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer implemented method of determining an indication of one or more weighting parameters for use in applying upsampling to input pixel values representing an image region to determine a block of one or more upsampled pixel values, the method comprising:
applying a horizontal edge filter to two or more of the input pixel values to determine a first filtered value;
applying a vertical edge filter to two or more of the input pixel values to determine a second filtered value;
applying a horizontal line filter to three or more of the input pixel values to determine a third filtered value;
applying a vertical line filter to three or more of the input pixel values to determine a fourth filtered value;
using the first, second, third and fourth filtered values to determine the indication of one or more weighting parameters, wherein the one or more weighting parameters are indicative of relative horizontal and vertical variation of the input pixel values within the image region; and
outputting the determined indication of the one or more weighting parameters for use in applying upsampling to the input pixel values representing the image region to determine a block of one or more upsampled pixel values,
wherein said using the first, second, third and fourth filtered values to determine the indication of one or more weighting parameters comprises:
processing the input pixel values with an implementation of a neural network to determine a residual value; and
combining the determined residual value with the first, second, third and fourth filtered values to determine the indication of one or more weighting parameters.

2. The method of claim 1 wherein said using the first, second, third and fourth filtered values to determine the indication of one or more weighting parameters comprises combining the first, second, third and fourth filtered values by performing a weighted sum, optionally wherein one or more of the weights used in the weighted sum is trained so that the indication of one or more weighting parameters indicates one or more weighting parameters that are indicative of relative horizontal and vertical variation of the input pixels within the image region.

3. The method of claim 1 or 2 wherein the indication of the one or more weighting parameters is clamped to be in a range [0,1] before it is output.

4. The method of any preceding claim wherein the neural network has been trained using Quantization Aware Training (QAT).

5. The method of claim 4 wherein the neural network comprises a first convolution layer, a second convolution layer and a third convolution layer, and wherein said processing the input pixel values with the implementation of the neural network comprises:
using the first convolution layer to determine a first intermediate tensor based on the input pixel values, wherein the first intermediate tensor extends in only one of a horizontal dimension and a vertical dimension with respect to the dimensions of the image region represented by the input pixel values;
using the second convolution layer to determine a second intermediate tensor based on the first intermediate tensor, wherein the second intermediate tensor does not extend in either the horizontal dimension or the vertical dimension with respect to the dimensions of the image region represented by the input pixel values; and
using the third convolution layer to determine the residual value based on the second intermediate tensor.

6. The method of claim 5 wherein the image region is part of an input image, and wherein the upsampling is to be performed iteratively for a plurality of partially overlapping image regions within the input image,
wherein said processing the input pixel values with the implementation of the neural network further comprises storing the first intermediate tensor in a buffer, and
wherein the first convolution layer operates on input pixel values within a first portion of a current image region that does not overlap with a previous image region, but does not operate on input pixel values within a second portion of the current image region that does overlap with the previous image region, to determine the first intermediate tensor.

7. The method of claim 5 or 6 wherein the neural network further comprises a first activation function implemented between the first convolution layer and the second convolution layer, and a second activation function implemented between the second convolution layer and the third convolution layer,
wherein either:
the first activation function is a first rectified linear unit and the second activation function is a second rectified linear unit, and said processing the input pixel values with the implementation of the neural network further comprises: (i) using the first rectified linear unit to set negative values in the first intermediate tensor to zero, and (ii) using the second rectified linear unit to set negative values in the second intermediate tensor to zero; or
the first activation function is an identity function and the second activation function is an absolute function, and said processing the input pixel values with the implementation of the neural network further comprises using the absolute function to set the values in the second intermediate tensor to be absolute values.

8. The method of any preceding claim wherein the input pixel values are values of input pixels having locations corresponding to a repeating quincunx arrangement of upsampled pixel locations,
optionally wherein the input pixel values are represented in two input blocks, wherein one of the two input blocks comprises the input pixel values of input pixels having locations corresponding to locations within odd rows of the repeating quincunx arrangement of upsampled pixel locations, and the other of the two input blocks comprises the input pixel values of input pixels having locations corresponding to locations within even rows of the repeating quincunx arrangement of upsampled pixel locations.

9. The method of any preceding claim wherein input pixels are represented by values in multiple channels, wherein upsampled pixels are represented by values in multiple channels, wherein said input pixel values are values of the input pixels in a single channel, and wherein said upsampled pixel values are values of the upsampled pixels in said single channel.

10. The method of any preceding claim wherein either:
the input pixel values and the upsampled pixel values are Y channel values, and wherein the upsampling of the Y channel values is for use in a super resolution technique; or
input pixel values and the upsampled pixel values are Green channel values, and wherein the upsampling of the Green channel values is for use in a demosaicing technique.

11. The method of any preceding claim wherein determining each of said one or more of the upsampled pixel values comprises, in accordance with the determined one or more weighting parameters:
applying one or more first kernels to at least a first subset of the input pixel values to determine a horizontal component,
applying one or more second kernels to at least a second subset of the input pixel values to determine a vertical component, and
combining the determined horizontal and vertical components,
such that each of said one or more of the upsampled pixel values is determined in accordance with the relative horizontal and vertical variation of the input pixel values within the image region,
optionally wherein said combining the determined horizontal and vertical components comprises:
multiplying the horizontal component by a first of the weighting parameters to determine a weighted horizontal component;
multiplying the vertical component by a second of the weighting parameters to determine a weighted vertical component; and
summing the weighted horizontal component and the weighted vertical component.

12. A processing module configured to determine an indication of one or more weighting parameters for use in applying upsampling to input pixel values representing an image region to determine a block of one or more upsampled pixel values, the processing module comprising:
horizontal edge filtering logic configured to apply a horizontal edge filter to two or more of the input pixel values to determine a first filtered value;
vertical edge filtering logic configured to apply a vertical edge filter to two or more of the input pixel values to determine a second filtered value;
horizontal line filtering logic configured to apply a horizontal line filter to three or more of the input pixel values to determine a third filtered value;
vertical line filtering logic configured to apply a vertical line filter to three or more of the input pixel values to determine a fourth filtered value; and
processing logic configured to:
use the first, second, third and fourth filtered values to determine the indication of one or more weighting parameters, wherein the one or more weighting parameters are indicative of relative horizontal and vertical variation of the input pixel values within the image region; and
output the determined indication of the one or more weighting parameters for use in applying upsampling to the input pixel values representing the image region to determine a block of one or more upsampled pixel values,
wherein the processing logic is configured to use the first, second, third and fourth filtered values to determine the indication of one or more weighting parameters by:
processing the input pixel values with an implementation of a neural network to determine a residual value; and
combining the determined residual value with the first, second, third and fourth filtered values to determine the indication of one or more weighting parameters.

13. Computer readable code configured to cause the method of any of claims 1 to 11 to be performed when the code is run.

14. A computer readable storage medium having stored thereon an integrated circuit definition dataset that, when processed in an integrated circuit manufacturing system, configures the integrated circuit manufacturing system to manufacture a processing module as claimed in claim 12.

## Patentansprüche

1. Computerimplementiertes Verfahren zum Ermitteln einer Angabe eines oder mehrerer Gewichtungsparameter zur Verwendung beim Anwenden von Upsampling auf Eingabepixelwerte, die eine Bildregion darstellen, um einen Block eines oder mehrerer hochgesampelter Pixelwerte zu ermitteln, das Verfahren umfassend:
Anwenden eines horizontalen Kantenfilters auf zwei oder mehr der Eingabepixelwerte, um einen ersten gefilterten Wert zu ermitteln;
Anwenden eines vertikalen Kantenfilters auf zwei oder mehr der Eingabepixelwerte, um einen zweiten gefilterten Wert zu ermitteln;
Anwenden eines horizontalen Linienfilters auf drei oder mehr der Eingabepixelwerte, um einen dritten gefilterten Wert zu ermitteln;
Anwenden eines vertikalen Linienfilters auf drei oder mehr der Eingabepixelwerte, um einen vierten gefilterten Wert zu ermitteln;
Verwenden des ersten, zweiten, dritten und vierten gefilterten Wertes, um die Angabe eines oder mehrerer Gewichtungsparameter zu ermitteln, wobei der eine oder die mehreren Gewichtungsparameter eine relative horizontale und vertikale Variation der Eingabepixelwerte innerhalb der Bildregion anzeigen; und
Ausgeben der ermittelten Angabe des einen oder der mehreren Gewichtungsparameter zur Verwendung beim Anwenden von Upsampling auf die Eingabepixelwerte, welche die Bildregion darstellen, um einen Block eines oder mehrerer hochgesampelter Pixelwerte zu ermitteln,
wobei die Verwendung des ersten, zweiten, dritten und vierten gefilterten Wertes zum Ermitteln der Angabe eines oder mehrerer Gewichtungsparameter Folgendes umfasst:
Verarbeiten der Eingabepixelwerte mit einer Implementierung eines neuronalen Netzwerks, um einen Restwert zu ermitteln; und
Kombinieren des ermittelten Restwerts mit dem ersten, zweiten, dritten und vierten gefilterten Wert, um die Angabe eines oder mehrerer Gewichtungsparameter zu ermitteln.

2. Verfahren nach Anspruch 1, wobei das Verwenden des ersten, zweiten, dritten und vierten gefilterten Wertes zum Ermitteln der Angabe eines oder mehrerer Gewichtungsparameter ein Kombinieren des ersten, zweiten, dritten und vierten gefilterten Wertes durch Ausführen einer gewichteten Summe umfasst, optional, wobei ein oder mehrere der in der gewichteten Summe verwendeten Gewichtungen so trainiert werden, dass die Angabe eines oder mehrerer Gewichtungsparameter einen oder mehrere Gewichtungsparameter anzeigt, die relative horizontale und vertikale Variation der Eingabepixel innerhalb der Bildregion anzeigen.

3. Verfahren nach Anspruch 1 oder 2, wobei die Angabe des einen oder der mehreren Gewichtungsparameter so begrenzt wird, dass sie in einem Bereich [0,1] liegt, bevor sie ausgegeben wird.

4. Verfahren nach einem der vorhergehenden Ansprüche, wobei das neuronale Netzwerk unter Verwendung von Quantisierungsbewusstem Training (QAT) trainiert wurde.

5. Verfahren nach Anspruch 4, wobei das neuronale Netzwerk eine erste Faltungsschicht, eine zweite Faltungsschicht und eine dritte Faltungsschicht umfasst, und wobei das Verarbeiten der Eingabepixelwerte mit der Implementierung des neuronalen Netzwerks Folgendes umfasst:
Verwenden der ersten Faltungsschicht, um einen ersten Zwischentensor basierend auf den Eingabepixelwerten zu ermitteln, wobei sich der erste Zwischentensor in nur einer von einer horizontalen Dimension und einer vertikalen Dimension in Bezug auf die Dimensionen der durch die Eingabepixelwerte dargestellten Bildregion erstreckt;
Verwenden der zweiten Faltungsschicht, um einen zweiten Zwischentensor basierend auf dem ersten Zwischentensor zu ermitteln, wobei sich der zweite Zwischentensor weder in der horizontalen Dimension noch in der vertikalen Dimension in Bezug auf die Dimensionen der durch die Eingabepixelwerte dargestellten Bildregion erstreckt; und
Verwenden der dritten Faltungsschicht, um den Restwert basierend auf dem zweiten Zwischentensor zu ermitteln.

6. Verfahren nach Anspruch 5, wobei die Bildregion Teil eines Eingabebildes ist, und wobei das Upsampling iterativ für eine Vielzahl von teilweise überlappenden Bildregionen innerhalb des Eingabebildes durchgeführt wird,
wobei das Verarbeiten der Eingabepixelwerte mit der Implementierung des neuronalen Netzwerks ferner ein Speichern des ersten Zwischentensors in einem Puffer umfasst, und
wobei die erste Faltungsschicht auf Eingabepixelwerten innerhalb eines ersten Abschnitts einer aktuellen Bildregion arbeitet, die sich nicht mit einer vorherigen Bildregion überlappt, jedoch nicht auf Eingabepixelwerten innerhalb eines zweiten Teils der aktuellen Bildregion arbeitet, die sich mit der vorherigen Bildregion überlappt, um den ersten Zwischentensor zu ermitteln.

7. Verfahren nach Anspruch 5 oder 6, wobei das neuronale Netzwerk ferner eine erste Aktivierungsfunktion, die zwischen der ersten Faltungsschicht und der zweiten Faltungsschicht implementiert ist, und eine zweite Aktivierungsfunktion, die zwischen der zweiten Faltungsschicht und der dritten Faltungsschicht implementiert ist, umfasst,
wobei entweder:
die erste Aktivierungsfunktion eine erste gleichgerichtete lineare Einheit ist und die zweite Aktivierungsfunktion eine zweite gleichgerichtete lineare Einheit ist, und das Verarbeiten der Eingabepixelwerte mit der Implementierung des neuronalen Netzwerks ferner umfasst: (i) Verwenden der ersten gleichgerichteten linearen Einheit, um negative Werte in dem ersten Zwischentensor auf Null zu setzen, und (ii) Verwenden der zweiten gleichgerichteten linearen Einheit, um negative Werte in dem zweiten Zwischentensor auf Null zu setzen; oder
die erste Aktivierungsfunktion eine Identitätsfunktion ist und die zweite Aktivierungsfunktion eine Absolutfunktion ist und das Verarbeiten der Eingabepixelwerte mit der Implementierung des neuronalen Netzwerks ferner ein Verwenden der Absolutfunktion umfasst, um die Werte in dem zweiten Zwischentensor als Absolutwerte einzustellen.

8. Verfahren nach einem der vorhergehenden Ansprüche, wobei die Eingabepixelwerte Werte von Eingabepixeln sind, die Positionen haben, die einer sich wiederholenden Quincunx-Anordnung von Positionen hochgesampelter Pixel entsprechen,
optional, wobei die Eingabepixelwerte in zwei Eingabeblöcken dargestellt werden, wobei einer der zwei Eingabeblöcke die Eingabepixelwerte von Eingabepixeln umfasst, die Positionen haben, die Positionen innerhalb ungerader Reihen der sich wiederholenden Quincunx-Anordnung von Positionen hochgesampelter Pixel entsprechen, und der andere der zwei Eingabeblöcke die Eingabepixelwerte von Eingabepixeln umfasst, die Positionen haben, die Positionen innerhalb gerader Reihen der sich wiederholenden Quincunx-Anordnung von Positionen hochgesampelter Pixel entsprechen.

9. Verfahren nach einem der vorhergehenden Ansprüche, wobei Eingabepixel durch Werte in mehreren Kanälen dargestellt werden, wobei hochgesampelte Pixel durch Werte in mehreren Kanälen dargestellt werden, wobei die Eingabepixelwerte Werte der Eingabepixel in einem einzigen Kanal sind, und wobei die hochgesampelten Pixelwerte Werte der hochgesampelten Pixel in dem einzigen Kanal sind.

10. Verfahren nach einem der vorhergehenden Ansprüche, wobei entweder:
die Eingabepixelwerte und die hochgesampelten Pixelwerte Y-Kanalwerte sind, und wobei das Upsampling der Y-Kanalwerte zur Verwendung in einer Superauflösungstechnik dient; oder
Eingabepixelwerte und die hochgesampelten Pixelwerte grüne Kanalwerte sind, und wobei das Upsampling der grünen Kanalwerte zur Verwendung in einer Entmosaikierungstechnik dient.

11. Verfahren nach einem der vorhergehenden Ansprüche, wobei das Ermitteln jedes des einen oder der mehreren der hochgesampelten Pixelwerte, gemäß dem ermittelten einen oder den mehreren Gewichtungsparametern, Folgendes umfasst:
Anwenden eines oder mehrerer erster Kernel auf mindestens eine erste Teilmenge der Eingabepixelwerte, um eine horizontale Komponente zu ermitteln,
Anwenden eines oder mehrerer zweiter Kernel auf mindestens eine zweite Teilmenge der Eingabepixelwerte, um eine vertikale Komponente zu ermitteln, und
Kombinieren der ermittelten horizontalen und vertikalen Komponenten,
sodass jeder des einen oder der mehreren der hochgesampelten Pixelwerte gemäß der relativen horizontalen und vertikalen Variation der Eingabepixelwerte innerhalb der Bildregion ermittelt wird,
optional, wobei das Kombinieren der ermittelten horizontalen und vertikalen Komponente Folgendes umfasst:
Multiplizieren der horizontalen Komponente mit einem ersten der Gewichtungsparameter, um eine gewichtete horizontale Komponente zu ermitteln;
Multiplizieren der vertikalen Komponente mit einem zweiten der Gewichtungsparameter, um eine gewichtete vertikale Komponente zu ermitteln; und
Summieren der gewichteten horizontalen Komponente und der gewichteten vertikalen Komponente.

12. Verarbeitungsmodul, das so eingerichtet ist, dass es eine Angabe eines oder mehrerer Gewichtungsparameter zur Verwendung beim Anwenden von Upsampling auf Eingabepixelwerte, die eine Bildregion darstellen, ermittelt, um einen Block von einem oder mehreren hochgesampelten Pixelwerten zu ermitteln, das Verarbeitungsmodul umfassend:
horizontale Kantenfilterlogik, die eingerichtet ist, ein horizontales Kantenfilter auf zwei oder mehr der Eingabepixelwerte anzuwenden, um einen ersten gefilterten Wert zu ermitteln;
vertikale Kantenfilterlogik, die eingerichtet ist, ein Vertikalkantenfilter auf zwei oder mehr der Eingabepixelwerte anzuwenden, um einen zweiten gefilterten Wert zu ermitteln;
horizontale Linienfilterlogik, die eingerichtet ist, ein horizontales Linienfilter auf drei oder mehr der Eingabepixelwerte anzuwenden, um einen dritten gefilterten Wert zu ermitteln;
vertikale Linienfilterlogik, die eingerichtet ist, ein vertikales Linienfilter auf drei oder mehr der Eingabepixelwerte anzuwenden, um einen vierten gefilterten Wert zu ermitteln; und
Verarbeitungslogik, die eingerichtet ist zum:
Verwenden des ersten, zweiten, dritten und vierten gefilterten Wertes, um die Angabe eines oder mehrerer Gewichtungsparameter zu ermitteln, wobei der eine oder die mehreren Gewichtungsparameter eine relative horizontale und vertikale Variation der Eingabepixelwerte innerhalb der Bildregion angeben; und
Ausgeben der ermittelten Angabe des einen oder der mehreren Gewichtungsparameter zur Verwendung beim Anwenden von Upsampling auf die Eingabepixelwerte, welche die Bildregion darstellen, um einen Block eines oder mehrerer hochgesampelter Pixelwerte zu ermitteln,
wobei die Verarbeitungslogik so eingerichtet ist, dass sie den ersten, zweiten, dritten und vierten gefilterten Wert verwendet, um die Angabe eines oder mehrerer Gewichtungsparameter zu ermitteln durch:
Verarbeiten der Eingabepixelwerte mit einer Implementierung eines neuronalen Netzwerks, um einen Restwert zu ermitteln; und
Kombinieren des ermittelten Restwerts mit dem ersten, zweiten, dritten und vierten gefilterten Wert, um die Angabe eines oder mehrerer Gewichtungsparameter zu ermitteln.

13. Computerlesbarer Code, der dazu eingerichtet ist, ein Durchführen des Verfahrens nach einem der Ansprüche 1 bis 11 zu veranlassen, wenn der Code ausgeführt wird.

14. Computerlesbares Speichermedium, das einen darauf gespeicherten Datensatz zur Definition einer integrierten Schaltung aufweist, der, wenn er in einem System zur Herstellung integrierter Schaltungen verarbeitet wird, das System zum Herstellen integrierter Schaltungen veranlasst, ein Verarbeitungsmodul nach Anspruch 12 herzustellen.

## Revendications

1. Procédé mis en œuvre par ordinateur afin de déterminer une indication d'un ou plusieurs paramètres de pondération destinés à être utilisés lors de l'application d'un suréchantillonnage à des valeurs de pixels d'entrée représentant une région d'image afin de déterminer un bloc d'une ou plusieurs valeurs de pixels suréchantillonnés, le procédé comprenant :
l'application d'un filtre de bord horizontal à au moins deux des valeurs de pixels d'entrée afin de déterminer une première valeur filtrée,
l'application d'un filtre de bord vertical à au moins deux des valeurs de pixels d'entrée afin de déterminer une deuxième valeur filtrée,
l'application d'un filtre de ligne horizontale à au moins trois des valeurs de pixels d'entrée afin de déterminer une troisième valeur filtrée,
l'application d'un filtre de ligne vertical à au moins trois des valeurs de pixels d'entrée afin de déterminer une quatrième valeur filtrée,
l'utilisation des première, deuxième, troisième et quatrième valeurs filtrées afin de déterminer l'indication d'un ou plusieurs paramètres de pondération, le ou lesdits paramètres de pondération étant indicatifs d'une variation horizontale et verticale relative des valeurs de pixels d'entrée au sein de la région d'image, et
la sortie de l'indication déterminée du ou des paramètres de pondération destinés à être utilisés lors de l'application d'un suréchantillonnage aux valeurs de pixels d'entrée représentant la région d'image afin de déterminer un bloc d'une ou plusieurs valeurs de pixels suréchantillonnés,
ladite utilisation des première, deuxième, troisième et quatrième valeurs filtrées afin de déterminer l'indication d'un ou plusieurs paramètres de pondération comprenant :
le traitement des valeurs de pixels d'entrée avec une mise en œuvre d'un réseau neuronal afin de déterminer une valeur résiduelle, et
la combinaison de la valeur résiduelle déterminée aux première, deuxième, troisième et quatrième valeurs filtrées afin de déterminer l'indication d'un ou plusieurs paramètres de pondération.

2. Procédé selon la revendication 1, dans lequel ladite utilisation des première, deuxième, troisième et quatrième valeurs filtrées afin de déterminer l'indication d'un ou plusieurs paramètres de pondération comprend la combinaison des première, deuxième, troisième et quatrième valeurs filtrées par réalisation d'une addition pondérée, un ou plusieurs des poids utilisés dans l'addition pondérée étant éventuellement entraînés de telle façon que l'indication d'un ou plusieurs paramètres de pondération indique un ou plusieurs paramètres de pondération qui sont indicatifs de la variation horizontale et verticale relative des pixels d'entrée au sein de la région.

3. Procédé selon la revendication 1 ou 2, dans lequel l'indication du ou des paramètres de pondération est fixée pour se situer dans une plage [0,1] avant qu'elle ne soit délivrée en sortie.

4. Procédé selon l'une quelconque des revendications précédentes, dans lequel le réseau neuronal a été entraîné par entraînement sensible à la quantification (QAT, Quantization-Aware Training).

5. Procédé selon la revendication 4, dans lequel le réseau neuronal comprend une première couche de convolution, une deuxième couche de convolution et une troisième couche de convolution, et dans lequel ledit traitement des valeurs de pixels d'entrée avec la mise en œuvre du réseau neuronal comprend :
l'utilisation de la première couche de convolution afin de déterminer un premier tenseur intermédiaire compte tenu des valeurs de pixels d'entrée, ledit premier tenseur intermédiaire s'étendant dans une seule dimension parmi une dimension horizontale et une dimension verticale eu égard aux dimensions de la région d'image représentée par les valeurs de pixels d'entrée,
l'utilisation de la deuxième couche de convolution afin de déterminer un deuxième tenseur intermédiaire compte tenu du premier tenseur intermédiaire, le deuxième tenseur intermédiaire ne s'étendant ni dans la dimension horizontale ni la dimension verticale eu égard aux dimensions de la région d'image représentée par les valeurs de pixels d'entrée, et
l'utilisation de la troisième couche de convolution afin de déterminer la valeur résiduelle compte tenu du deuxième tenseur intermédiaire.

6. Procédé selon la revendication 5, dans lequel la région d'image fait partie d'une image d'entrée, et dans lequel le suréchantillonnage doit être effectué de manière itérative pour une pluralité de régions d'image se chevauchant partiellement au sein de l'image d'entrée,
dans lequel ledit traitement des valeurs de pixels d'entrée avec la mise en œuvre du réseau neuronal comprend en outre le stockage du premier tenseur intermédiaire dans une mémoire tampon, et
dans lequel la première couche de convolution opère sur des valeurs de pixels d'entrée présents dans une première partie d'une région d'image courante qui ne chevauche pas une région d'image précédente, mais n'opère pas sur des valeurs de pixels d'entrée présents dans une deuxième partie de la région d'image courante qui chevauche la région d'image précédente, afin de déterminer le premier tenseur intermédiaire.

7. Procédé selon la revendication 5 ou 6, dans lequel le réseau neuronal comprend en outre une première fonction d'activation mise en œuvre entre la première couche de convolution et la deuxième couche de convolution, et une deuxième fonction d'activation mise en œuvre entre la deuxième couche de convolution et la troisième couche de convolution,
et dans lequel soit :
la première fonction d'activation est une première unité linéaire rectifiée et la deuxième fonction d'activation est une deuxième unité linéaire rectifiée, et ledit traitement des valeurs de pixels d'entrée avec la mise en œuvre du réseau neuronal comprend en outre : (i) l'utilisation de la première unité linéaire rectifiée pour mettre à zéro des valeurs négatives dans le premier tenseur intermédiaire, et (ii) l'utilisation de la deuxième unité linéaire rectifiée pour mettre à zéro des valeurs négatives dans le deuxième tenseur intermédiaire, soit
la première fonction d'activation est une fonction d'identité et la deuxième fonction d'activation est une fonction absolue, et ledit traitement des valeurs de pixels d'entrée avec la mise en œuvre du réseau de neurones comprend en outre l'utilisation de la fonction absolue pour fixer les valeurs dans le deuxième tenseur intermédiaire comme étant des valeurs absolues.

8. Procédé selon l'une quelconque des revendications précédentes, dans lequel les valeurs de pixels d'entrée sont des valeurs de pixels d'entrée ayant des emplacements correspondant à un agencement en quinconce répété d'emplacements de pixels suréchantillonnés,
les valeurs de pixels d'entrée étant éventuellement représentées dans deux blocs d'entrée, l'un des deux blocs d'entrée comprenant les valeurs de pixels d'entrée propres à des pixels d'entrée ayant des emplacements correspondant à des emplacements dans des rangées impaires de l'agencement en quinconce répétitif d'emplacements de pixels suréchantillonnés, et l'autre des deux blocs d'entrée comprenant les valeurs de pixels d'entrée propres à des pixels d'entrée ayant des emplacements correspondant à des emplacements présents dans des rangées paires de l'agencement en quinconce répétitif d'emplacements de pixels suréchantillonnés.

9. Procédé selon l'une quelconque des revendications précédentes, dans lequel des pixels d'entrée sont représentés par des valeurs dans des canaux multiples et dans lequel des pixels suréchantillonnés sont représentés par des valeurs dans des canaux multiples, lesdites valeurs de pixels d'entrée étant des valeurs des pixels d'entrée d'un canal unique, et lesdites valeurs de pixels suréchantillonnés étant des valeurs des pixels suréchantillonnés dudit canal unique.

10. Procédé selon l'une quelconque des revendications précédentes, dans lequel soit :
les valeurs de pixels d'entrée et les valeurs de pixels suréchantillonnés sont des valeurs du canal Y, et le suréchantillonnage des valeurs du canal Y est destiné à être utilisé dans une technique de super résolution ; soit
les valeurs de pixels d'entrée et les valeurs de pixels suréchantillonnés sont des valeurs du canal vert, et le suréchantillonnage des valeurs du canal vert est destiné à être utilisé dans une technique de démosaïquage.

11. Procédé selon l'une quelconque des revendications précédentes, dans lequel la détermination de chacune desdites une ou plusieurs des valeurs de pixels suréchantillonnés comprend, conformément aux un ou plusieurs paramètres de pondération déterminés :
l'application d'un ou plusieurs premiers noyaux, au moins à un premier sous-ensemble des valeurs de pixels d'entrée afin de déterminer une composante horizontale,
l'application d'un ou plusieurs deuxièmes noyaux, au moins à un deuxième sous-ensemble des valeurs de pixels d'entrée afin de déterminer une composante verticale, et
la combinaison des composantes horizontale et verticale déterminées,
de telle façon que chacune desdites une ou plusieurs des valeurs de pixels suréchantillonnés est déterminée conformément à la variation horizontale et verticale relative des valeurs de pixels d'entrée au sein de la région d'image ;
ladite combinaison des composantes horizontale et verticale déterminées comprenant éventuellement :
la multiplication de la composante horizontale par un premier des paramètres de pondération afin de déterminer une composante horizontale pondérée,
la multiplication de la composante verticale par un deuxième des paramètres de pondération afin de déterminer une composante verticale pondérée, et
l'addition de la composante horizontale pondérée et de la composante verticale pondérée.

12. Module de traitement configuré pour déterminer une indication d'un ou plusieurs paramètres de pondération destinés à être utilisés lors de l'application d'un suréchantillonnage à des valeurs de pixels d'entrée représentant une région d'image afin de déterminer un bloc d'une ou plusieurs valeurs de pixels suréchantillonnés, le module de traitement comprenant :
une logique de filtrage de bord horizontal configurée pour appliquer un filtre de bord horizontal à au moins deux des valeurs de pixels d'entrée afin de déterminer une première valeur filtrée,
une logique de filtrage de bord vertical configurée pour appliquer un filtre de bord vertical à au moins deux des valeurs de pixels d'entrée afin de déterminer une deuxième valeur filtrée,
une logique de filtrage de ligne horizontale configurée pour appliquer un filtre de ligne horizontale à au moins trois des valeurs de pixels d'entrée afin de déterminer une troisième valeur filtrée,
une logique de filtrage de ligne verticale configurée pour appliquer un filtre de ligne verticale à au moins trois des valeurs de pixels d'entrée afin de déterminer une quatrième valeur filtrée, et
une logique de traitement configurée pour :
utiliser les première, deuxième, troisième et quatrième valeurs filtrées afin de déterminer l'indication d'un ou plusieurs paramètres de pondération, le ou lesdits paramètres de pondération étant indicatifs d'une variation horizontale et verticale relative des valeurs de pixels d'entrée au sein de la région d'image, et
délivrer en sortie l'indication déterminée du ou des paramètres de pondération destinés à être utilisés lors de l'application d'un suréchantillonnage aux valeurs de pixels d'entrée représentant la région d'image afin de déterminer un bloc d'une ou plusieurs valeurs de pixels suréchantillonnés ;
ladite logique de traitement étant configurée pour utiliser les première, deuxième, troisième et quatrième valeurs filtrées afin de déterminer l'indication d'un ou plusieurs paramètres de pondération par :
traitement des valeurs de pixels d'entrée avec une mise en œuvre d'un réseau neuronal afin de déterminer une valeur résiduelle, et
combinaison de la valeur résiduelle déterminée aux première, deuxième, troisième et quatrième valeurs filtrées afin de déterminer l'indication d'un ou plusieurs paramètres de pondération.

13. Code lisible par ordinateur configuré pour amener le procédé selon l'une quelconque des revendications 1 à 11 à être réalisé lorsque le code est exécuté.

14. Support de stockage lisible par ordinateur sur lequel est stocké un ensemble de données de définition de circuit intégré qui, lorsqu'il est traité dans un système de fabrication de circuit intégré, configure le système de fabrication de circuit intégré pour la fabrication d'un module de traitement selon la revendication 12.
